# FASCICULE DE BREVET EUROPEEN

(11) **EP 2 983 232 B1**
(45) Date de publication et mention de la délivrance du brevet: **13.09.2017**
(21) Numéro de dépôt: 15180023.2
(22) Date de dépôt: 06.08.2015
(51) Int. Cl.: H01M 4/60, H01M 4/587, H01M 4/62, H01M 10/052, H01M 4/36, H01M 4/137

(54) **ACCUMULATEUR AU LITHIUM COMPRENANT UN MATERIAU D'ELECTRODE POSITIVE A BASE D'UN MATERIAU CARBONE SPECIFIQUE FONCTIONNALISE PAR DES COMPOSES ORGANIQUES SPECIFIQUES**
LITHIUM-AKKUMULATOR, DER EIN MATERIAL FÜR POSITIVE ELEKTRODEN AUF BASIS EINES SPEZIFISCHEN KOHLENSTOFFMATERIALS UMFASST, DAS DURCH SPEZIFISCHE ORGANISCHE VERBINDUNGEN FUNKTIONALISIERT IST
LITHIUM STORAGE BATTERY COMPRISING A POSITIVE ELECTRODE MATERIAL MADE OF A SPECIFIC CARBON MATERIAL FUNCTIONALISED BY SPECIFIC ORGANIC COMPOUNDS

(30) Priorité: 08.08.2014 FR 1457713
(43) Date de publication de la demande: 10.02.2016
(73) Titulaire: Commissariat à l'Énergie Atomique et aux Énergies Alternatives, 75015 Paris (FR)
(72) Inventeur: CHARRIER, Gaëlle, 78000 VERSAILLES (FR); CAMPIDELLI, Stéphane, 78690 SAINT REMY L'HONORE (FR); BARCHASZ, Céline, 38600 FONTAINE (FR); JOUSSELME, Bruno, 91300 MASSY (FR); CORNUT, Renaud, 92320 CHATILLON (FR)
(74) Mandataire: Brevalex

(56) Documents cités:
- GREGORY G WILDGOOSE ET AL: "Chemically Modified Carbon Nanotubes for Use in Electroanalysis", MICROCHIMICA ACTA ; AN INTERNATIONAL JOURNAL ON MICRO AND TRACEANALYSIS, SPRINGER-VERLAG, VI, vol. 152, no. 3-4, 30 novembre 2005 (2005-11-30), pages 187-214, XP019377233, ISSN: 1436-5073, DOI: 10.1007/S00604-005-0449-X
- PIERRE LE BARNY ET AL: "Covalently functionalized single-walled carbon nanotubes and graphene composite electrodes for pseudocapacitor application", PROCEEDINGS OF SPIE, vol. 8814, 24 septembre 2013 (2013-09-24), page 88140I, XP055097426, ISSN: 0277-786X, DOI: 10.1117/12.2030011
- GRGORY POGNON ET AL: "Performance and stability of electrochemical capacitor based on anthraquinone modified activated carbon", JOURNAL OF POWER SOURCES, ELSEVIER SA, CH, vol. 196, no. 8, 27 septembre 2010 (2010-09-27), pages 4117-4122, XP028359620, ISSN: 0378-7753, DOI: 10.1016/J.JPOWSOUR.2010.09.097 [extrait le 2010-10-10]
- K.W. LEITNER ET AL: "Combination of redox capacity and double layer capacitance in composite electrodes through immobilization of an organic redox couple on carbon black", ELECTROCHIMICA ACTA, vol. 50, no. 1, 9 septembre 2004 (2004-09-09), pages 199-204, XP055183501, ISSN: 0013-4686, DOI: 10.1016/j.electacta.2004.07.030
- KLEMEN PIRNAT ET AL: "Electrochemically stabilised quinone based electrode composites for Li-ion batteries", JOURNAL OF POWER SOURCES, ELSEVIER SA, CH, vol. 199, 17 octobre 2011 (2011-10-17), pages 308-314, XP028117028, ISSN: 0378-7753, DOI: 10.1016/J.JPOWSOUR.2011.10.068 [extrait le 2011-10-20]

## Description

### DOMAINE TECHNIQUE

La présente invention a trait à de nouveaux accumulateurs au lithium ainsi qu'à des matériaux d'électrode positive, et plus particulièrement, à des matériaux d'électrode positive à base d'un matériau carboné fonctionnalisé de manière spécifique, en vue de pouvoir être utilisés dans des électrodes positives d'accumulateurs au lithium.

Le domaine de l'invention peut ainsi être défini comme celui des dispositifs de stockage d'énergie, en particulier celui des accumulateurs électrochimiques au lithium.

### ÉTAT DE LA TECHNIQUE ANTÉRIEURE

Les dispositifs de stockage d'énergie sont classiquement des accumulateurs électrochimiques fonctionnant sur le principe de cellules électrochimiques aptes à délivrer un courant électrique grâce à la présence dans chacune d'entre elles d'un couple d'électrodes (respectivement, une électrode positive et une électrode négative) séparé par un électrolyte, les électrodes comprenant des matériaux spécifiques aptes à réagir selon une réaction d'oxydo-réduction, moyennant quoi il y a production d'électrons à l'origine du courant électrique et productions d'ions qui vont circuler d'une électrode à l'autre par le biais d'un électrolyte.

Des accumulateurs souscrivant à ce principe actuellement les plus usités sont les suivants :
*les accumulateurs Ni-MH utilisant de l'hydrure métallique et de l'oxyhydroxyde de nickel comme matériaux d'électrode ;
*les accumulateurs Ni-Cd utilisant du cadmium et de l'oxyhydroxyde de nickel comme matériaux d'électrode ;
*les accumulateurs Acide-Plomb utilisant du plomb et de l'oxyde de plomb PbO₂ comme matériaux d'électrode ; et
*les accumulateurs au lithium, tels que les accumulateurs lithium-ion, utilisant classiquement, en tout ou partie, des matériaux lithiés comme matériaux actifs d'électrode, lesquels constituent des matériaux d'intercalation/désintercalation du lithium, selon que l'accumulateur est en processus de charge ou de décharge.

Du fait que le lithium est un élément solide particulièrement léger et présente un potentiel électrochimique le plus réducteur, permettant ainsi l'accès à une densité d'énergie massique intéressante, les accumulateurs au lithium ont détrôné largement les autres accumulateurs mentionnés ci-dessus du fait de l'amélioration continue des performances des accumulateurs lithium-ion en termes de densité d'énergie. En effet, les accumulateurs lithium-ion permettent d'obtenir des densités d'énergie massique et volumique (pouvant être supérieures à 180 Wh.kg⁻¹) nettement supérieures à celles des accumulateurs Ni-MH et Ni-Cd (pouvant aller de 50 à 100 Wh.kg⁻¹) et Acide-plomb (pouvant aller de 30 à 35 Wh.kg⁻¹). Qui plus est, les accumulateurs Li-ion peuvent présenter une tension nominale de cellule supérieure à celle des autres accumulateurs (par exemple, une tension nominale de l'ordre de 3,6 V pour une cellule mettant en oeuvre, comme matériaux d'électrode, le couple LiCoO₂/graphite contre une tension nominale de l'ordre de 1,5 V pour les autres accumulateurs susmentionnés).

De par leurs propriétés intrinsèques, les accumulateurs lithium-ion s'avèrent donc particulièrement intéressants pour les domaines où l'autonomie est un critère primordial, tel que cela est le cas des domaines de l'informatique, de la vidéo, de la téléphonie, des transports tels que les véhicules électriques, les véhicules hybrides, ou encore des domaines médicaux, spatiaux, de la microélectronique. Toutefois, la technologie des accumulateurs lithium-ion voit aujourd'hui ses performances plafonner.

Actuellement, une nouvelle technologie d'accumulateur à base de lithium se profile comme une alternative prometteuse, cette technologie étant la technologie lithium/soufre, dans laquelle l'électrode positive comprend, comme matériau actif, du soufre élémentaire ou un dérivé du soufre, tel que du sulfure de lithium ou un polysulfure de lithium.

L'utilisation du soufre, comme matériau actif d'une électrode positive, est particulièrement attractive, car le soufre présente une capacité spécifique théorique très élevée pouvant être jusqu'à plus de 10 fois supérieure à celle obtenue pour des matériaux conventionnels d'électrode positive (de l'ordre de 1675 mAh/g au lieu de 140 mAh/g pour LiCoO₂). Qui plus est, le soufre est présent, de manière abondante, sur la planète et se caractérise, de ce fait, par des coûts faibles. Enfin, il est peu toxique. Toutes ces qualités contribuent à le rendre particulièrement attractif en vue d'une mise en place à grande échelle, notamment pour les véhicules électriques, ce d'autant plus que les accumulateurs lithium/soufre peuvent permettre d'atteindre des densités d'énergie massique pouvant aller de 300 à 600 Wh.g⁻¹ contre 200-250 Wh.g⁻¹ au maximum pressentis pour les accumulateurs lithium-ion.

D'un point de vue fonctionnel, ce type d'accumulateur présente un mécanisme de décharge original sans réactions d'insertion/désinsertion d'ions lithium comme pour les accumulateurs lithium-ion. La réaction à l'origine de la production de courant (c'est-à-dire lorsque l'accumulateur est en mode de décharge) met en jeu une réaction d'oxydation du lithium à l'électrode négative qui produit des électrons, qui vont alimenter le circuit extérieur auquel sont reliées les électrodes positive et négative, et une réaction de réduction du soufre à l'électrode positive.

Ainsi, de manière explicite, en processus de décharge, la réaction globale est la suivante :

S₈ + 16Li → 8Li₂S

qui est la somme de la réaction de réduction du soufre à l'électrode positive (S₈ + 16e⁻ → 8S²⁻) et de la réaction d'oxydation du lithium à l'électrode négative (Li → Li⁺₊ e⁻).

Il est entendu que les réactions électrochimiques inverses se produisent lors du processus de charge.

Comme il ressort de l'équation ci-dessus, la réaction implique un échange de 16 électrons, ce qui justifie la capacité spécifique élevée du soufre (1675 mAh.g⁻¹).

D'un point de vue mécanistique, et sans être lié par la théorie, à l'état initial (c'est-à-dire lorsque la batterie est à l'état de charge complet), la matière active, qui est du soufre élémentaire, est présente à l'état solide dans l'électrode positive. Au cours de la réduction du soufre, c'est-à-dire au cours de la décharge, les molécules cycliques de soufre sont réduites et forment des chaînes linéaires de polysulfures de lithium, de formule générale Li₂Sₙ, avec n pouvant aller de 2 à 8. Puisque la molécule de départ est S₈, les premiers composés formés sont les polysulfures de lithium à chaînes longues, tels que Li₂S₈ ou Li₂S₆. Ces polysulfures de lithium étant solubles dans les électrolytes organiques, la première étape de décharge consiste donc en la solubilisation de la matière active dans l'électrolyte, et la production de polysulfures de lithium à chaînes longues en solution. Puis, au fur et à mesure que la réduction du soufre se poursuit, la longueur de chaîne des polysulfures est graduellement réduite, et des composés tels que Li₂S₅, Li₂S₄ ou encore Li₂S₂ sont formés en solution. Enfin, le produit final de réduction est le sulfure de lithium (Li₂S), qui, lui, est insoluble dans les électrolytes organiques.

La technologie lithium/soufre présente plusieurs inconvénients, qui justifient la raison pour laquelle elle ne fait pas encore l'objet d'une commercialisation à l'heure actuelle.

D'une part, le soufre élémentaire utilisé comme matériau actif d'électrode positive constitue un isolant électronique et ne peut donc être de ce fait utilisé seul pour constituer l'électrode positive mais uniquement en association avec un matériau conducteur de l'électricité, tel qu'un matériau carboné comme du noir de carbone.

D'autre part, comme déjà mentionné ci-dessus, au cours du cyclage, il y a dissolution de la matière active dans l'électrolyte, et plus spécifiquement, formation de polysulfures de lithium lors des premières étapes de réduction de S₈ solubles dans les électrolytes organiques. Ces polysulfures de lithium peuvent entraîner une augmentation de la viscosité de l'électrolyte et donc une diminution de la mobilité ionique, et peuvent également diffuser au travers de l'électrolyte, venir corroder l'électrode négative et créer un phénomène d'autodécharge de l'accumulateur.

Enfin, la présence de polysulfures dissous dans l'électrolyte entraîne l'apparition d'un mécanisme de navette redox ainsi qu'une chute importante de l'efficacité coulombique.

Pour pallier ces inconvénients, des études ont été consacrées à l'élaboration de nouveaux matériaux d'électrode positive pour les accumulateurs du type lithium/soufre, par exemple, par encapsulation/imprégnation de la matière soufrée dans une matrice, comme cela est décrit, notamment, dans Nat.Mat. 8 (2009), 500-506, où la matrice est un réseau de carbone mésoporeux imprégné par du soufre, le but étant d'éviter la dissolution du soufre élémentaire et des polysulfures de lithium dans l'électrolyte. Cependant, ces matériaux restent d'une efficacité relative.

Outre la technologie lithium/soufre, il existe également une autre technologie d'accumulateur à base de lithium, appelé également technologie lithium-organique, dans laquelle l'électrode positive comprend, comme matériau actif, des molécules organiques comprenant au moins un groupe électroattracteur, c'est-à-dire un groupe apte à capter des électrons lors de la décharge de l'accumulateur, tels que des groupes carbonyles comme, plus spécifiquement, les groupes quinones.

Toutefois, comme pour le cas des accumulateurs lithium/soufre décrits ci-dessus, l'inconvénient majeur de ces systèmes réside dans la solubilité des molécules organiques électroattractives dans les électrolytes liquides classiquement utilisés, ce qui entraîne d'importantes pertes de capacité après un nombre de cycles relativement restreint. Pour contourner cet inconvénient, certains travaux, comme ceux décrits dans Angew.Chem.Int.Ed. 2013, 52, 9162-9166, ont prévu de remplacer les électrolytes liquides par des électrolytes se présentant sous forme d'un gel polymérique, dans l'idée de limiter la diffusion de la matière active vers l'électrode négative. Toutefois, ceci ne permet pas de supprimer le phénomène de dissolution des molécules organiques électroattractives mais juste de le différer dans le temps.

En outre, il est décrit, dans Microchim Acta, 152, 187-214 (2006), des nanotubes de carbone modifiés chimiquement et destinés à être utilisés dans le domaine de l'électroanalyse.

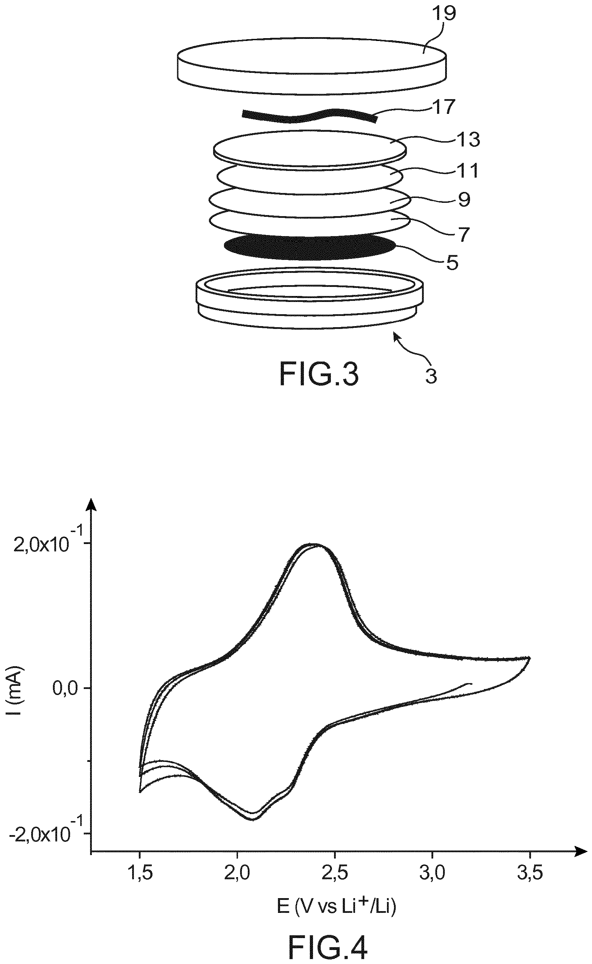

Plus spécifiquement, il est décrit des nanotubes de carbone fonctionnalisés, de manière covalente, par un composé anthraquinonyl ou un composé 4-nitrophényl (cf. page 195, Figure 3), ces deux composés entrant dans la catégorie des composés électroattracteurs. Cette fonctionnalisation est réalisée à partir d'un sel clivable diazonium.

Ces nanotubes de carbone ainsi fonctionnalisés sont décrits comme pouvant être utilisés dans des électrodes pour la réduction électrolytique de O₂ en eau oxygénée (cf. page 197, Figure 4) mais en aucun dans des accumulateurs au lithium.

Il est décrit, dans Proceedings of SPIE, vol. 8814, des nanotubes de carbone ou de l'oxyde de graphène greffés, de manière covalente, par des composés anthraquinones, qui constituent la matière active, en vue d'être utilisés dans des électrodes de pseudocapacités haute performance pour notamment augmenter leur capacité spécifique. Il n'est pas fait mention dans ce document de l'utilisation de ces nanotubes dans des accumulateurs au lithium.

Ainsi, à l'heure actuelle, que ce soient pour les accumulateurs lithium/soufre ou pour les accumulateurs lithium-organique, aucune réponse satisfaisante n'a été apportée au problème de dissolution dans l'électrolyte des matériaux actifs compris dans l'électrode positive.

Dans ce contexte, les inventeurs se sont ainsi fixé pour objectif de mettre au point de nouveaux accumulateurs au lithium à base de matériaux actifs d'électrode positive, qui ne soient pas à même de pouvoir être dissous dans des électrolytes lors de la décharge de l'accumulateur.

### EXPOSÉ DE L'INVENTION

Ainsi, l'invention a trait à un accumulateur au lithium comprenant au moins une cellule électrochimique comprenant un électrolyte disposé entre une électrode positive et une électrode négative, ladite électrode positive comprenant un matériau d'électrode positive comprenant un matériau carboné choisi parmi les nanotubes de carbone, le graphène ou les dérivés de graphène choisis parmi les oxydes de graphène, les oxydes de graphène réduits, lequel matériau carboné est fonctionnalisé de manière covalente par au moins un composé organique comprenant au moins un groupe électroattracteur.

Avant d'entrer plus en détail dans l'exposé de cette invention, nous précisons les définitions suivantes.

Par électrode positive, on entend, classiquement, dans ce qui précède et ce qui suit, l'électrode qui fait office de cathode, quand le générateur débite du courant (c'est-à-dire lorsqu'il est en processus de décharge) et qui fait office d'anode lorsque le générateur est en processus de charge.

Par électrode négative, on entend, classiquement, dans ce qui précède et ce qui suit, l'électrode qui fait office d'anode, quand le générateur débite du courant (c'est-à-dire lorsqu'il est en processus de décharge) et qui fait office de cathode, lorsque le générateur est en processus de charge.

On précise que, par « fonctionnalisé, de manière covalente », on entend, au sens de l'invention, une immobilisation du ou des composés organiques comprenant au moins un groupe électroattracteur sur le matériau carboné (nanotubes de carbone et graphène) par le biais d'une liaison chimique covalente.

On précise que, par groupe électroattracteur, l'on entend un groupe apte à attirer les électrons et, spécifiquement, dans notre cas de figure, apte à attirer les électrons lors d'une réaction de réduction pour former un groupe réduit, et plus spécifiquement lors d'une réaction de réduction se produisant à l'électrode positive, lorsque l'accumulateur au lithium est en processus de décharge. Le ou les composés porteurs d'au moins un tel groupe constituent ainsi la matière active de l'électrode positive, c'est-à-dire la matière engagée dans les réactions de charge et décharge de l'accumulateur.

Les matériaux d'électrode positive utilisés dans les accumulateurs au lithium de l'invention ne présentent pas les inconvénients de ceux de l'art antérieur, notamment en ce qui concerne la solubilisation des matériaux dans les électrolytes, car le ou les composés organiques comprenant au moins un groupe électroattracteur sont immobilisés par covalence sur le matériau carboné, qui lui-même n'est pas soluble. En conséquence, les matériaux d'électrode restent confinés au sein de l'électrode positive.

Selon l'invention, le composé organique comprenant au moins un groupe électroattracteur peut être un composé comprenant un ou plusieurs groupes cycliques, par exemple, un ou plusieurs groupes aryles, dont l'un au moins de ces groupes est porteur d'au moins un groupe électroattracteur.

Selon l'invention, le groupe électroattracteur peut avantageusement être choisi parmi les groupes carbonyles, les groupes disulfures, les groupes thiocarbonyles.

Lorsqu'il s'agit de groupes carbonyles, ceux-ci sont, de préférence, conjugués avec une double liaison.

Des composés comprenant un groupe carbonyle, comme groupe électroattracteur et plus spécifiquement, comprenant un groupe carbonyle, comme groupe électroattracteur, conjugué avec une double liaison, sont, avantageusement, des composés quinoniques, à savoir des composés qui sont dérivés de composés aromatiques (tels que le benzène, le naphtalène et l'anthracène) par conversion d'un nombre pair de groupes -CH= en groupes -C(=O)- avec un réarrangement approprié de doubles liaisons, ce qui conduit ainsi à une structure dione cyclique conjuguée.

A titre d'exemples, on peut citer :
- des composés benzoquinones, tels que ceux de formules (I) et (II) suivantes : 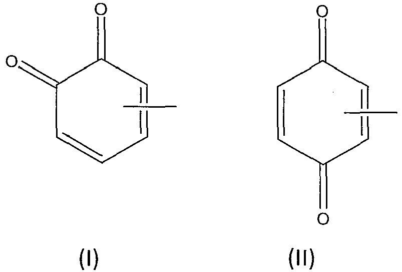
- des composés napthoquinones, tels que celui de formule (III) suivante : 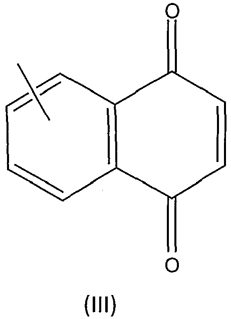
- des composés anthraquinones, tels que celui de formule (IV) suivante : 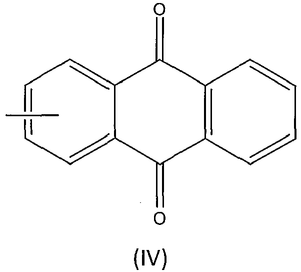
- des composés phénanthrènequinones, tels que celui de formule (V) suivante : 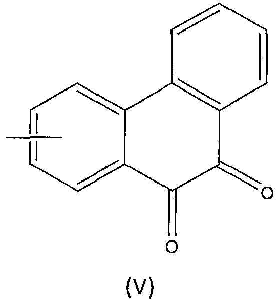
les liaisons situées au milieu des liaisons carbone-carbone indiquant que l'attachement au matériau carboné du composé concerné se fait par l'un des atomes de carbone constitutif du ou des cycles benzéniques.

De manière plus spécifique et à titre d'exemple, un composé fonctionnalisant par covalence un matériau carboné répond à la formule (VI) suivante : 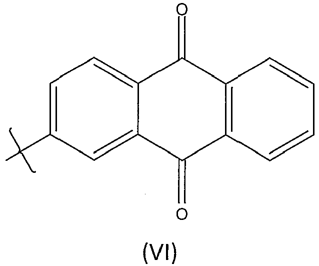 la liaison entrecoupée d'une accolade indiquant que l'attachement du composé concerné par covalence au matériau carboné s'effectue *via* cette liaison.

Lorsqu'un tel matériau d'électrode est incorporé dans un accumulateur au lithium pour former l'électrode positive et que l'électrode négative est en lithium, les réactions aux électrodes peuvent être schématisées par les équations suivantes :

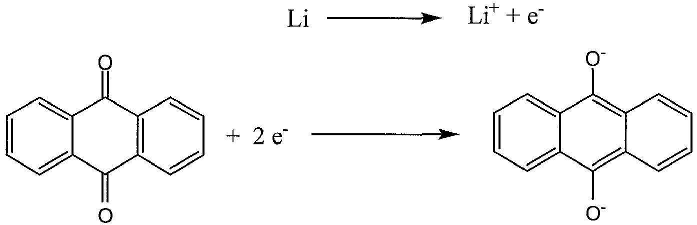

Des composés comprenant, comme groupe électroattracteur, un groupe carbonyle, peuvent être également des composés du type « polymère » comprenant au moins un motif répétitif, lequel motif répétitif comprend un ou plusieurs cycles, dont l'un de ces cycles est un cycle comprenant au moins un groupe carbonyle.

Plus spécifiquement, de tels composés peuvent comprendre au moins un motif répétitif de la famille des quinones, tels que des anthraquinones.

A titre d'exemple, on peut citer comme composé répondant à cette spécificité un composé comprenant, comme motif répétitif, un motif répétitif de formule (VI') suivante : 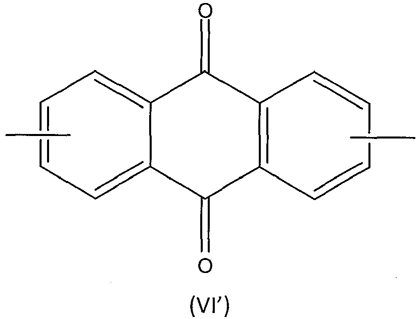 les deux liaisons entrecoupant les liaisons carbone-carbone indiquant que celles-ci sont liées à l'un des atomes de carbone du cycle benzénique, dont elles entrecoupent la liaison carbone-carbone,
le polymère résultant de la répétition dudit motif répétitif pouvant être lié au matériau carboné via un groupe organique formant pont entre le motif répétitif concerné et le matériau carboné,
un tel groupe organique formant pont pouvant répondre à la formule suivante : 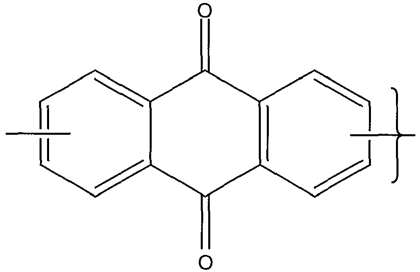 la liaison entrecoupée par une accolade indiquant que le groupe est lié à la paroi des nanotubes de carbone par un atome de carbone du cycle benzénique, l'autre liaison entrecoupant le cycle benzénique indiquant que le groupe est lié à un autre motif répétitif.

Des composés appropriés pour l'invention comprenant, comme groupe électroattracteur, un groupe disulfure peuvent être également des composés cycliques comportant un ou plusieurs cycles, dans lesquels au moins un cycle comporte un groupe disulfure.

Des composés répondant à cette spécificité peuvent être des composés cycliques comprenant au moins un cycle aromatique accolé à au moins un cycle comprenant un groupe disulfure.

De tels composés peuvent répondre à l'une des formules (VII) à (X) suivantes : 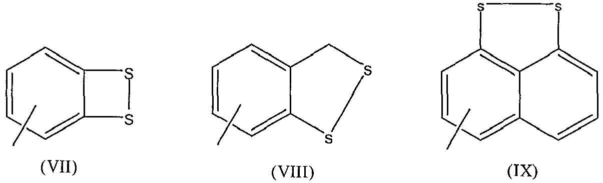 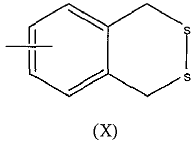 la liaison entrecoupant la liaison carbone-carbone indiquant que la liaison entre le ou les cycles benzéniques et le matériau carboné se fait par l'un des atomes de carbone de ce ou ces cycles ; ces composés présentant respectivement les potentiels standards calculés avec le contre-ion Li⁺ dans l'acétonitrile (vs Li⁺/Li) suivants : 2,78 ; 1,88 ; 1,82 et 1,73.

Des composés répondant à cette spécificité peuvent être également des composés du type « polymère » comprenant au moins un motif répétitif, lequel motif répétitif comprend un ou plusieurs cycles, dont l'un de ces cycles est un cycle comprenant un groupe disulfure.

Plus spécifiquement, de tels composés peuvent comprendre au moins un motif répétitif répondant à l'une des formules (XI) à (XV) suivantes : 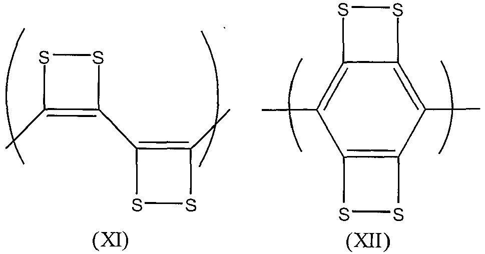 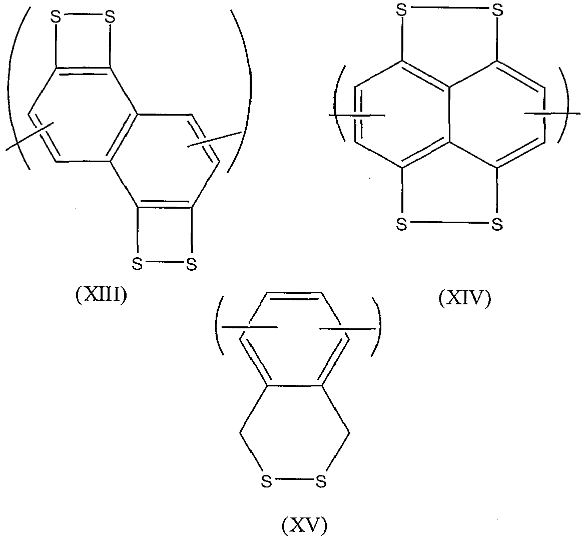 lesdits motifs répétitifs pouvant être liés au matériau carboné via un groupe organique formant pont entre le motif répétitif concerné et le matériau carboné,
les deux liaisons entrecoupant les liaisons carbone-carbone pour les formules (XIII) à (XV) indiquant que celles-ci sont liées à l'un des atomes de carbone du cycle benzénique, dont elles entrecoupent la liaison carbone-carbone.

A titre d'exemple, lorsque le motif répétitif est un motif répétitif de formule (XV) susmentionnée, le composé comprenant un tel motif répétitif peut être lié au matériau carboné par un groupe organique formant un pont de formule suivante : 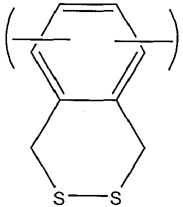 l'un des atomes de carbone du cycle benzénique (représenté par une liaison entrecoupant une liaison carbone-carbone du cycle) étant lié à un motif répétitif de formule (XV) et un autre atome de carbone du cycle benzénique (représenté par l'autre liaison entrecoupant une liaison carbone-carbone du cycle) étant lié, de manière covalente, au matériau carboné.

Un tel composé lié à un matériau carboné peut répondre notamment à la formule suivante :

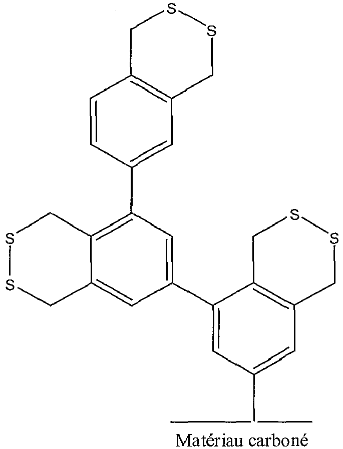

Pour des raisons de simplification, un seul composé greffé a été représenté sur la formule ci-dessus, sachant qu'il s'entend que plusieurs composés de ce type sont greffés, de manière covalente, au matériau carboné.

Parmi les composés comprenant au moins un cycle comprenant un groupe disulfure, les composés préférés sont ceux pour lesquels ledit cycle comporte 4 atomes (étant entendu que deux de ces atomes sont des atomes de soufre).

En effet, il a pu être constaté qu'avec des composés répondant à cette spécificité, il est possible d'accéder, à la fois, à une bonne capacité spécifique (par exemple, supérieur à 400 mAh/g) et à un potentiel redox élevé. C'est le cas notamment des composés comprenant un motif répétitif de formule (XI), (XII), (XIII) et (XIV) qui présentent, respectivement, une capacité massique théorique (exprimée en mAh/g) de 526, 471, 426 et 426, ces capacités massiques étant tout à fait compétitives si on les compare à celle du LiFePO₄, matériau couramment utilisé pour entrer dans la constitution des électrodes positives (lequel présente une capacité de 170 mAh/g).

Qui plus est, on notera que la présence de cycles aromatiques dans les composés explicites mentionnés ci-dessus (en particulier, ceux de formules (I) à (XV)) permet d'assurer la conduction électronique des électrons provenant du matériau carboné, lors du fonctionnement de l'accumulateur au lithium, cette conduction étant rendue possible par la présence d'atomes de carbone à l'état d'hydridation sp².

Pour les différents composés mentionnés ci-dessus, il s'entend qu'ils doivent présenter une forme réduite, laquelle dans le cas des composés à groupe disulfure, se matérialise par une ouverture de la liaison disulfure. Ainsi, à titre d'exemple, pour le composé de formule (VII), la forme réduite de celui-ci correspond à : 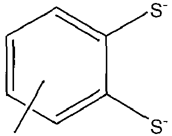 la liaison entrecoupant la liaison carbone-carbone du cycle benzénique indiquant que la liaison entre le cycle benzénique et le matériau carboné se fait par l'un des atomes de carbone de ce cycle.

Ainsi, pour les composés comprenant au moins un cycle comprenant un groupe disulfure, l'existence du groupe disulfure permettra à la réaction électrochimique de se produire par rupture de liaisons S-S, tout en conservant un point d'ancrage sur le matériau carboné, évitant ainsi la dissolution de la matière active dans l'électrolyte avec lequel le matériau est destiné à être mis en contact.

Comme mentionné ci-dessous, le matériau carboné peut consister en des nanotubes de carbone, en du graphène ou un dérivé de graphène choisi parmi les oxydes de graphène, les oxydes de graphène réduits.

Par graphène, on précise qu'il s'agit, au sens strict, d'un cristal monoplan se présentant sous forme d'un plan de carbone (ou feuillet de carbone), où les atomes sont positionnés suivant un ordre régulier de structure hexagonale, l'épaisseur de ce plan (ou feuillet) correspondant à celle d'un atome de carbone correspondant ainsi à une épaisseur inférieure au nanomètre, ce qui n'exclut pas qu'il puisse coexister avec des couches multiples (par exemple, de 2 à 10 couches), auquel cas on parle de « Few Layer Graphene » (connu également sous l'abréviation FLG).

Concernant les nanotubes de carbone, il peut s'agir de nanotubes de carbone monofeuillets (connus sous l'abréviation SWNT) ou multifeuillets (connus sous l'abréviation MWNT).

L'électrode négative des accumulateurs de l'invention peut comprendre, par exemple, du lithium sous forme métallique et, selon un mode particulier de réalisation, être en lithium métallique (ce qui signifie qu'elle ne comprend pas d'autres ingrédients) ou bien peut comprendre un matériau apte à insérer et désinsérer du lithium, tel qu'un matériau carboné comme du graphite, un matériau oxyde tel que Li₄Ti₅O₁₂ ou un élément apte à former alliage avec du lithium, tel que du silicium ou de l'étain.

L'électrode positive, quant à elle, peut comprendre, outre le matériau d'électrode positive spécifique défini ci-dessus, par exemple, un liant, comme un liant polymérique (tel que du polyfluorure de vinylidène, de la cellulose) de sorte à améliorer la tenue de l'électrode.

L'électrode positive peut consister également uniquement en un matériau conforme à l'invention.

L'électrolyte, quant à lui, peut comprendre, en général, un sel de lithium, par exemple, choisi parmi LiClO₄, LiAsF₆, LiPF₆, LiBF₄, LiRfSO₃, LiCH₃SO₃, LiN(RfSO₂)₂, Rf étant choisi F ou un groupe perfluoroalkyle comportant de 1 à 8 atomes de carbone, du trifluorométhanesulfonylimide de lithium (connu sous l'abréviation LiTFSI), du bis(oxalato)borate de lithium (connu sous l'abréviation LiBOB), du bis(perfluoréthylsulfonyl)imide de lithium (également connu sous l'abréviation LiBETI), du fluoroalkylphosphate de lithium (connu sous l'abréviation LiFAP).

Le sel de lithium est, de préférence, dissous dans un solvant polaire aprotique, par exemple, un solvant polaire aprotique choisi parmi les solvants carbonates, les solvants éthers, les solvants esters, les solvants sulfones et les solvants nitriles.

En outre, l'électrolyte peut être amené à imbiber au moins un élément séparateur disposé entre les deux électrodes de l'accumulateur.

Les matériaux d'électrode positive utilisés dans les accumulateurs conformes à l'invention peuvent être préparés par un procédé comprenant les étapes suivantes :
a) une étape de mise en contact d'un matériau carboné avec un composé organique comprenant au moins un groupe électroattracteur ou précurseur de celui-ci et au moins un autre groupe, qui est un groupe du type sel clivable ;
b) une étape de greffage par covalence du composé comprenant au moins un groupe électroattracteur au matériau carboné ou précurseur de celui-ci par clivage du groupe du type sel clivable mentionné ci-dessus ; et
c) lorsque le composé comprend un groupe précurseur du groupe électroattracteur, une étape de transformation du groupe précurseur en ledit groupe électroattracteur.

Par « groupe du type sel clivable», on entend, classiquement, dans le cadre de l'invention un groupe choisi dans le groupe constitué par les sels de diazonium, les sels d'ammonium, les sels de phosphonium, les sels d'iodonium et les sels de sulfonium, lequel sel est apte à être clivé lors d'une étape de greffage.

De manière schématique, le groupe de type sel clivable peut être représenté par la formule :

-A⁺ X⁻

dans laquelle :
- A⁺ représente un cation monovalent ; et
- X⁻ représente un anion monovalent, qui peut être, notamment, choisi parmi les anions inorganiques tels que les halogénures comme I⁻, Br⁻ et Cl⁻, les halogénoborates tels que le tétrafluoroborate, les perchlorates, les sulfonates et les anions organiques tels que les alcoolates et les carboxylates.

Le composé organique comprenant au moins un groupe électroattracteur ou précurseur de celui-ci et au moins un autre groupe, qui est un groupe du type sel clivable peut être un composé comprenant un ou plusieurs groupes cycliques, par exemple, un ou plusieurs groupes aryles, dont l'un au moins de ces groupes est porteur d'au moins un groupe électroattracteur et l'un au moins de ces groupes est porteur d'au moins un groupe de type sel clivage, tel qu'un groupe diazonium.

A titre d'exemple, il peut s'agir d'un composé comprenant, en outre, comme groupe électroattracteur, un groupe carbonyle.

On peut citer comme exemple, des composés quinoniques porteur d'au moins un groupe diazonium, tels qu'un composé de formule suivante : 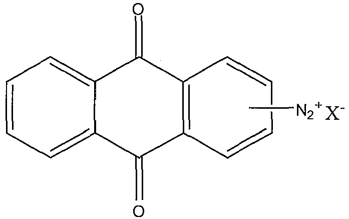 avec X⁻ étant tel que défini ci-dessus, X⁻ pouvant être notamment un anion tétrafluoroborate, le groupe N₂⁺X⁻ pouvant être lié à l'un quelconque des atomes de carbone des deux cycles benzéniques.

Lors de l'étape b), ces sels clivables sont capables, sous certaines conditions non-électrochimiques ou électrochimiques, de former, par clivage, lors de l'étape b), des espèces aptes à participer à des réactions chimiques, moyennant quoi elles se greffent, de manière covalente, au matériau carboné.

Selon une première variante, l'étape de greffage peut consister en un greffage chimique radicalaire dans des conditions non-électrochimiques.

Par « conditions non-électrochimiques », on entend dans le cadre de la présente invention en absence de tension électrique. Ainsi, les conditions non-électrochimiques mises en oeuvre sont des conditions qui permettent la formation d'entités radicalaires à partir du composé comprenant, entre autres, au moins un groupe du type sel clivable, en l'absence de l'application d'une quelconque tension électrique au niveau du matériau carboné sur lequel le composé est destiné à être greffé. Ces conditions impliquent des paramètres tels que, par exemple, la présence d'un agent réducteur.

Le terme « greffage chimique radicalaire » se réfère notamment à l'utilisation d'entités moléculaires extrêmement réactives typiquement radicalaires, capables de former des liaisons de type liaison covalente avec le matériau carboné, lesdites entités moléculaires étant générées indépendamment de la surface sur laquelle elles sont destinées à être greffées. Ainsi, la réaction de greffage conduit à la formation de liaisons covalentes entre la zone de la surface du matériau carboné sur laquelle le composé doit être greffé et l'entité radicalaire résultant du clivage du groupe de type sel clivable susmentionné.

A titre d'exemple, lorsque le groupe de type sel clivage est un groupe diazonium, l'étape de greffage, et plus spécifiquement de greffage chimique radicalaire, peut consister en une étape de réduction du groupe diazonium par un agent réducteur, moyennant quoi il y libération d'azote N₂, le composé résultant étant un composé radicalaire (le radical libre étant formé sur le carbone porteur initialement du groupe diazonium) qui réagit avec le matériau carboné pour former une liaison covalente. L'agent réducteur peut être notamment un métal, tel que du fer, de l'ascorbate de sodium ou de l'acide hypophosphoreux.

A titre illustratif, le schéma réactionnel d'une telle réaction avec un composé spécifique peut être le suivant :

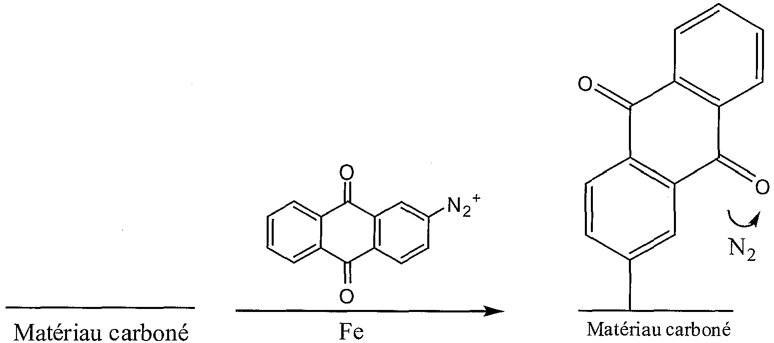

Pour des raisons de simplification, un seul composé greffé a été représenté sur la formule ci-dessus, sachant qu'il s'entend que plusieurs composés de ce type sont greffés, de manière covalente, au matériau carboné.

Selon une deuxième variante, l'étape de greffage peut consister en un greffage électrochimique.

On entend, classiquement, dans le cadre de la présente invention, par greffage électrochimique, un greffage électro-initié et localisé du composé comprenant au moins un groupe du type sel clivable sur le matériau carboné. Dans ce procédé, le matériau carboné est porté à un potentiel supérieur ou égal à un potentiel électrique seuil déterminé par rapport à une électrode de référence, ledit potentiel électrique seuil étant le potentiel au-delà duquel se produit le greffage du composé comprenant au moins un groupe du type sel clivable. L'application de ce potentiel permet notamment de polariser le matériau carboné tout en réduisant le composé porteur d'au moins un groupe du type sel clivable. On précise que, selon la nature du composé susmentionné, une fois greffé, il peut présenter une autre fonction réactive vis-à-vis d'un autre radical et apte à enclencher une polymérisation radicalaire qui ne dépend d'aucun potentiel électrique.

Cette variante de la présente invention peut être mise en oeuvre dans une cellule d'électrolyse comportant différentes électrodes : une électrode de travail constituée par le matériau carboné, une contre-électrode, par exemple, une électrode en platine, ainsi qu'une électrode de référence, par exemple, une électrode du type Ag/AgNO₃ et comprenant un électrolyte consistant en une solution organique comprenant un sel (tel qu'un sel de lithium) et le composé comprenant, entre autres, au moins un groupe du type sel clivable, les conditions appliquées pour le greffage électrochimique pouvant être celles d'une voltampérométrie cyclique ou d'une chronopotentiométrie, pour laquelle il est appliqué un nombre de cycles jusqu'à diminution voire, de préférence, disparition du pic de réduction du groupe du type sel clivable (celui-ci se situant par exemple autour de 0,45 V vs Ag/AgNO₃ lorsque ce groupe est un groupe diazonium), la réduction du groupe étant une indication que le composé est bien greffé sur le matériau carboné.

Selon le procédé de l'invention, le composé organique comprenant au moins un groupe électroattracteur ou précurseur de celui-ci et au moins un autre groupe, qui est un groupe du type sel clivable, peut être préparé préalablement à l'étape a) et notamment directement en présence du matériau carboné (auquel cas on pourra parler de préparation *in situ*).

Lorsque ces composés comportent, entre autres, un groupe du type sel clivable, qui est un groupe diazonium, ils peuvent être préparés par réaction de composés amines correspondants (c'est-à-dire des composés comprenant à la place du futur groupe diazonium un groupe amine) avec du NaNO₂ en milieu acide ou avec du NOBF₄ en milieu organique.

Parmi les matériaux d'électrode positive susceptibles d'entrer dans la constitution des accumulateurs de l'invention, certains sont des matériaux originaux, ces matériaux étant des matériaux d'électrode positive pour accumulateur au lithium comprenant un matériau carboné choisi parmi les nanotubes de carbone, le graphène ou les dérivés de graphène choisis parmi les oxydes de graphène, les oxydes de graphène réduits, lequel matériau carboné est fonctionnalisé de manière covalente par au moins un composé organique comprenant au moins un groupe électroattracteur, qui est un groupe disulfure.

Un tel composé organique peut notamment faire partie de la famille des composés cycliques comportant un ou plusieurs cycles, dans lesquels au moins un cycle comporte un groupe disulfure.

Des composés répondant à cette spécificité peuvent être des composés cycliques comprenant au moins un cycle aromatique accolé à au moins un cycle comprenant un groupe disulfure.

De tels composés peuvent répondre à l'une des formules (VII) à (X) suivantes : 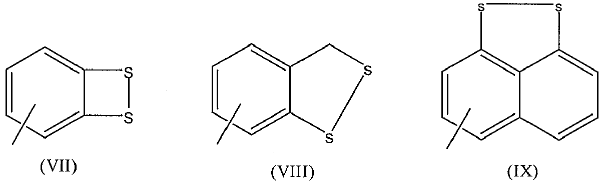 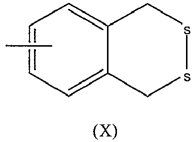 la liaison entrecoupant la liaison carbone-carbone indiquant que la liaison entre le ou les cycles benzéniques et le matériau carboné se fait par l'un des atomes de carbone de ce ou ces cycles ; ces composés présentant respectivement les potentiels standards calculés avec le contre-ion Li⁺ dans l'acétonitrile (vs Li⁺/Li) suivants : 2,78 ; 1,88 ; 1,82 et 1,73.

Des composés répondant à cette spécificité peuvent être également des composés du type « polymère » comprenant au moins un motif répétitif, lequel motif répétitif comprend un ou plusieurs cycles, dont l'un de ces cycles est un cycle comprenant un groupe disulfure.

Plus spécifiquement, de tels composés peuvent comprendre au moins un motif répétitif répondant à l'une des formules (XI) à (XV) suivantes : 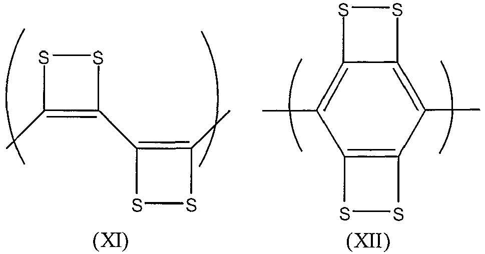 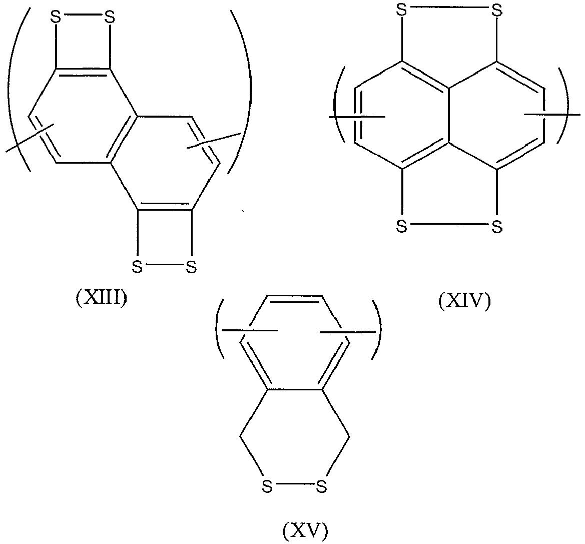 lesdits motifs répétitifs pouvant être liés au matériau carboné via un groupe organique formant pont entre le motif répétitif concerné et le matériau carboné,
les deux liaisons entrecoupant les liaisons carbone-carbone pour les formules (XIII) à (XV) indiquant que celles-ci sont liées à l'un des atomes de carbone du cycle benzénique, dont elles entrecoupent la liaison carbone-carbone.

A titre d'exemple, lorsque le motif répétitif est un motif répétitif de formule (XV) susmentionnée, le composé comprenant un tel motif répétitif peut être lié au matériau carboné par un groupe organique formant un pont de formule suivante : 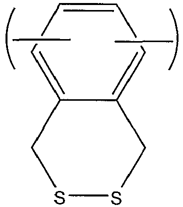 l'un des atomes de carbone du cycle benzénique (représenté par une liaison entrecoupant une liaison carbone-carbone du cycle) étant lié à un motif répétitif de formule (XV) et un autre atome de carbone du cycle benzénique (représenté par l'autre liaison entrecoupant une liaison carbone-carbone du cycle) étant lié, de manière covalente, au matériau carboné.

Un tel composé lié à un matériau carboné peut répondre notamment à la formule suivante :

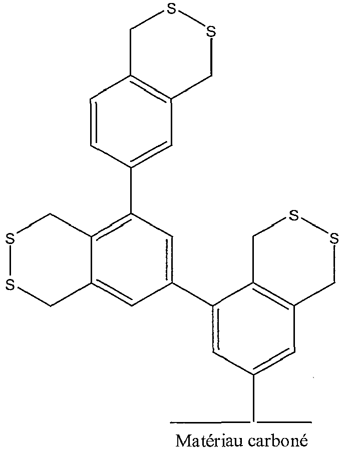

Pour des raisons de simplification, un seul composé greffé a été représenté sur la formule ci-dessus, sachant qu'il s'entend que plusieurs composés de ce type sont greffés, de manière covalente, au matériau carboné.

Parmi les composés comprenant au moins un cycle comprenant un groupe disulfure, les composés préférés sont ceux pour lesquels ledit cycle comporte 4 atomes (étant entendu que deux de ces atomes sont des atomes de soufre).

Enfin, l'invention a trait à une électrode positive comprenant un matériau d'électrode positive comprenant un matériau tel que défini ci-dessus.

D'autres caractéristiques apparaîtront mieux à la lecture du complément de description qui suit, lequel se rapporte à des exemples de fabrication de matériaux conformes à l'invention.

Bien entendu, les exemples qui suivent ne sont donnés qu'à titre d'illustration de l'objet de l'invention et ne constituent, en aucun cas, une limitation de cet objet.

L'invention va, à présent, être décrite en référence au mode de réalisation particulier défini ci-dessous en référence aux figures annexées.

### BRÈVE DESCRIPTION DES DESSINS

La figure 1 est un spectre infrarouge obtenu pour le produit de l'exemple 1 (partie b).
La figure 2 est un diagramme illustrant les courbes de cyclage obtenues, par voltampérométrie cyclique, avec le matériau obtenu à l'exemple 1 (partie d).
La figure 3 est une représentation, en vue éclatée, de l'accumulateur au lithium préparé selon l'exemple 2.
La figure 4 est un diagramme illustrant les courbes de cyclage obtenues, par voltampérométrie cyclique, avec l'accumulateur préparé à l'exemple 2.
La figure 5 est un diagramme illustrant les courbes de cyclage obtenues, par voltampérométrie cyclique, avec le système de l'essai A de l'exemple 2.
La figure 6 est un diagramme illustrant les courbes de cyclage obtenues, par voltampérométrie cyclique, avec le système de l'essai B de l'exemple 2.
La figure 7 est un diagramme illustrant des courbes de charge-décharge obtenues, à intensité constante (10 µA soit 5 mg.g⁻¹ pour les échantillons testés), avec l'accumulateur préparé selon l'exemple 2.
La figure 8 est un diagramme représentant l'évolution du potentiel E (V vs Li⁺/Li) en fonction de la capacité de décharge C (en mAh.g⁻¹ d'électrode) avec des accumulateurs préparés selon l'exemple 2.
La figure 9 est un diagramme représentant l'évolution de la capacité de décharge C (en mAh.g⁻¹ d'électrode) en fonction du nombre de cycles N pour trois piles boutons préparés selon l'exemple 2.
La figure 10 est un diagramme illustrant des courbes de cyclage obtenues à partir de systèmes décrits dans l'exemple 4.
La figure 11 est un diagramme illustrant l'évolution du potentiel E (V vs Li⁺/Li) en fonction de la capacité de décharge (en mAh.g⁻¹ d'électrode) pour des piles boutons décrites à l'exemple 4.
La figure 12 est un diagramme illustrant l'évolution de la capacité de décharge C (en mAh.g⁻¹ d'électrode) en fonction du nombre de cycles pour trois piles boutons préparés selon l'exemple 4.

### EXPOSÉ DÉTAILLÉ DE MODES DE RÉALISATION PARTICULIERS

### EXEMPLE 1

Cet exemple illustre la préparation d'un matériau carboné conforme à l'invention consistant en des nanotubes de carbone multi-parois fonctionnalisés, de manière covalente, par des polymères comprenant, comme motif répétitif, un motif répétitif de formule suivante : 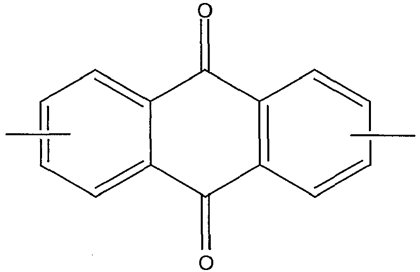 les deux liaisons entrecoupant les liaisons carbone-carbone indiquant que celles-ci sont liées à l'un des atomes de carbone du cycle benzénique, dont elles entrecoupent la liaison carbone-carbone,
le polymère résultant de la répétition dudit motif répétitif étant lié au matériau carboné via un groupe organique formant pont entre le motif répétitif concerné et le matériau carboné, ce groupe organique formant pont répondant à la formule suivante : 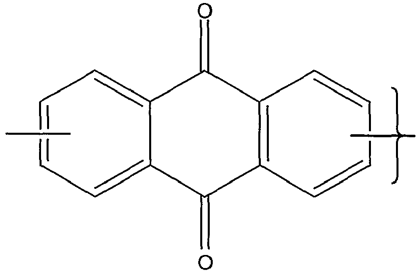 la liaison entrecoupée par une accolade indiquant que le groupe est lié à la paroi des nanotubes de carbone par un atome de carbone du cycle benzénique, l'autre liaison entrecoupant le cycle benzénique indiquant que le groupe est lié à un autre motif répétitif.

Pour ce faire, il est procédé à la mise en oeuvre des étapes suivantes :
- une étape de purification des nanotubes de carbone (étape a) ;
- une étape de préparation d'un composé diazoanthraquinone (étape b) ;
- une étape de greffage du composé diazoanthraquinone par voie chimique (étape c) ou par voie électrochimique (étape d).

### a)Purification des nanotubes de carbone

Les nanotubes de carbone utilisés sont des nanotubes de carbone multiparois (NC-3100) obtenus auprès de la société Nanocyl.

En vue de les purifier, ils sont dispersés dans de l'acide nitrique 65% par sonication pendant 30 minutes. Le mélange est ensuite porté à reflux à 110°C pendant 8 heures. Ce mélange est ensuite filtré sur une membrane en polytétrafluoroéthylène (présentant une taille de pores de 0,45 µm) pour récupérer les nanotubes de carbone. Ceux-ci sont ensuite redispersés dans une solution de soude NaOH 0,5 M par sonication pendant 30 minutes puis ils sont, de nouveau, récupérés par filtration, lavés à l'eau puis avec une solution d'acide chlorhydrique 1M. Enfin, ils sont de nouveau rincés à l'eau, à l'acétone puis à l'éther diéthylique.

### b)Préparation d'un composé diazoanthraquinone

Le composé diazoanthraquinone est préparé à partir de la 2-aminoanthraquinone selon le schéma réactionnel suivant :

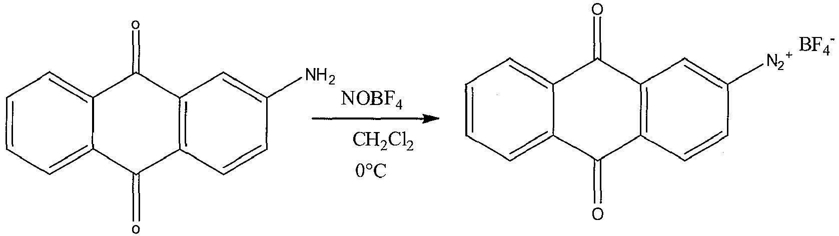

Le composé diazoanthraquinone est ainsi préparé par réduction de la 2-aminoanthraquinone avec un excès de tétrafluoroborate de nitrosonium NOBF₄ dans du dichlorométhane à 0°C pendant 2 heures.

Le solvant est ensuite évaporé et le produit résultant est séché sous vide.

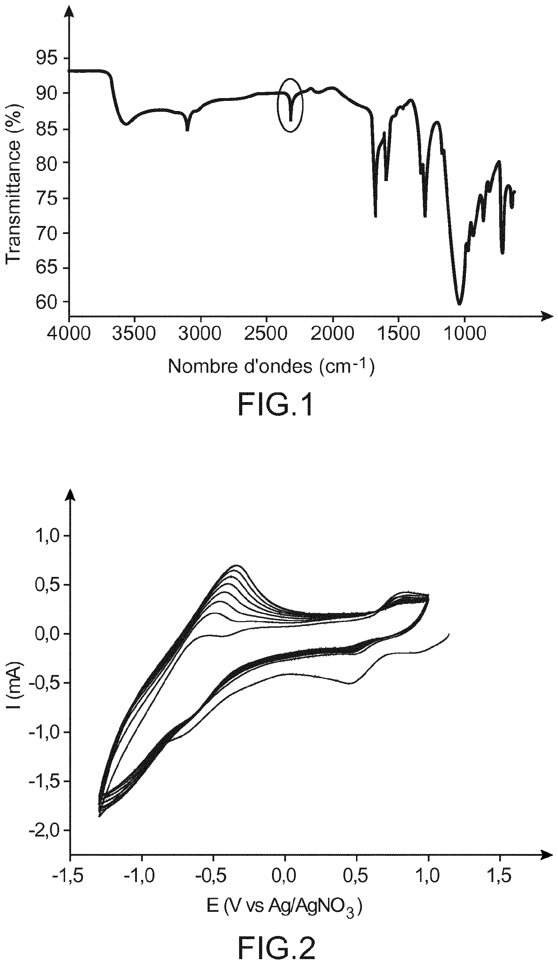

Le produit obtenu est analysé par spectrocopie infrarouge, le spectre obtenu étant représenté sur la figure 1 illustrant l'évolution de la transmittance (en %) en fonction du nombre d'ondes (en cm⁻¹).

La bande à 2300 cm⁻¹ est la signature de la présence des fonctions diazo N₂⁺.

### c)Greffage chimique du composé diazoanthraquinone

Le greffage du composé diazoanthraquinone préparé à l'étape b) est effectué par réduction de la fonction diazonium, moyennant quoi il y a élimination de N₂ et formation concomitante d'un polymère d'anthraquinone autour des nanotubes de carbone comme explicité au début de l'exemple 1.

Pour ce faire, les nanotubes de carbone purifiés à l'étape a) sont dispersés dans de la N-méthyl-2-pyrrolidone par sonication pendant 30 minutes.

Le composé diazoanthraquinone préparé selon l'étape b) est ensuite ajouté selon une teneur de 1 équivalent par carbone (c'est-à-dire une molécule par atome de carbone) suivi d'une pointe de spatule de poudre de fer.

La dispersion est agitée pendant 12 heures.

Les nanotubes sont ensuite récupérés par filtration sur une membrane en polytétrafluoroéthylène (présentant une taille de pores de 0,45 µm) puis lavés avec de l'acide chlorhydrique 1M puis avec de l'eau.

La procédure est répétée une nouvelle fois en intégralité.

Les nanotubes de carbone ainsi greffés sont enfin séchés sans vide.

### d)Greffage électrochimique du composé diazoanthraquinone

Pour greffer le composé diazoanthraquinone par voie électrochimique, il est utilisé un système à trois électrodes comprenant :
- une électrode de travail constituée de nanotubes de carbones préparés à l'étape a), cette électrode se présentant sous forme d'un disque en nanotubes de carbone, lequel disque présente un diamètre de 16 mm et une épaisseur de 10-20 micromètres;
- une contre-électrode en platine se présentant sous forme d'un fil de platine ;
- une électrode de référence consistant en un fil d'argent massif mis en contact avec une solution de AgNO₃ (10⁻³ M) dans l'acétonitrile ;
- un électrolyte consistant en de l'acétonitrile contenant du perchlorate de lithium LiClO₄(0,1 M) et le composé diazoanthraquinone à saturation.

Après dégazage de l'électrolyte par barbotage de N₂, le système est soumis à une voltampérométrie cyclique, consistant à effectuer un cyclage entre -1,25 à +1 V/ Ag-Ag⁺ (10⁻³ M dans l'acétonitrile) à raison d'une vitesse de balayage de 100 mV.s⁻¹, le nombre de cycles effectué étant de 10, les courbes de cyclage étant représentées sur la figure 2 (I exprimée en mA en fonction du potentiel E exprimé en V)). L'on peut observer sur cette figure un pic de réduction à -0,45 V, qui correspond au pic de réduction de la fonction diazonium.

### EXEMPLE 2

Dans cet exemple, est illustrée la préparation d'un accumulateur au lithium sous forme d'une pile bouton comprenant, comme électrode positive, l'électrode formée d'un matériau obtenu dans l'exemple 1.

L'accumulateur a été assemblé dans une boîte à gants sous atmosphère inerte d'argon.

L'accumulateur a été réalisé comme représenté sur la figure 3 jointe en annexe, en commençant par l'électrode positive puis en finissant par l'électrode négative, les différents éléments de l'accumulateur étant, dans l'ordre, les suivants :
- un fond de boîtier 3 ;
- un joint d'étanchéité 5 ;
- une électrode positive 7 se présentant sous forme d'un disque de nanotubes de carbone tel que décrit à l'exemple 1;
- un disque en Viledon^{®} 9 (qui est une membrane en fibres non tissées de polyoléfines (polypropylène/polyéthylène)) et un disque en Celgard^{®} 11 (qui est une membrane en polypropylène);
- une électrode négative 13 en lithium métallique sous forme d'un disque présentant un diamètre de 16 mm ;
- une cale (non représentée) et un ressort 17 ; et
- un couvercle 19.

L'électrolyte imprègne les deux disques de séparateur susmentionnés ainsi que la porosité de l'électrode positive. Il consiste en un électrolyte organique comprenant un mélange de solvants tétraéthylène glycol diméthyléther (TEGDME)/1,3-dioxolane (DIOX) 50/50 comprenant un sel de lithium bis(trifluorométhanesulfonyl)imide de lithium (LiTFSI) 1M.

L'atmosphère inerte susmentionnée est utilisée pour éviter toute réaction du lithium métallique constitutif de l'électrode négative et de l'électrolyte avec l'eau et l'oxygène de l'air ambiant.

L'accumulateur résultant est soumis à un test de voltampérométrie cyclique, consistant à effectuer un cyclage entre +1,5 à +3,5 V/ Li-Li⁺ à raison d'une vitesse de balayage de 10 mV.s⁻¹, le nombre de cycles effectué étant de 50 au maximum, un exemple de courbes de cyclage étant représenté sur la figure 4 (I exprimée en mA en fonction du potentiel E exprimé en V)). L'on peut observer sur cette figure un pic de réduction à 2,10 V vs Li⁺/Li, qui correspond au pic de réduction des fonctions carbonyles du groupe anthraquinone.

En effet, l'on peut attester de la certitude que le pic à 2,10 V vs Li⁺/Li correspond au pic des fonctions carbonyles du groupe anthraquinone par les essais suivants :
- un essai de voltampérométrie cyclique avec pour électrode de travail des nanotubes de carbone non greffés (dit, ci-dessous, essai A) ; et
- un essai de voltampérométrie cyclique avec pour électrode de travail, du carbone vitreux en vue de tester la signature électrochimique de l'anthraquinone non greffée (dit, ci-dessous, essai B).

Pour l'essai A, les conditions expérimentales sont les suivantes.

Il est utilisé un système à trois électrodes comprenant :
- une électrode de travail constituée de nanotubes de carbones purifiés conformément à l'étape a) de l'exemple 1, ladite électrode se présentant sous forme d'un disque de 16 mm de diamètre et de 10-20 micromètres d'épaisseur ;
- une contre-électrode en platine consistant en un fil de platine ;
- une électrode de référence consistant en un fil d'argent massif mis en contact avec une solution de AgNO₃ (10⁻³ M) dans l'acétonitrile ;
- un électrolyte consistant en de l'acétonitrile contenant du perchlorate de lithium LiClO₄(0,1 M).

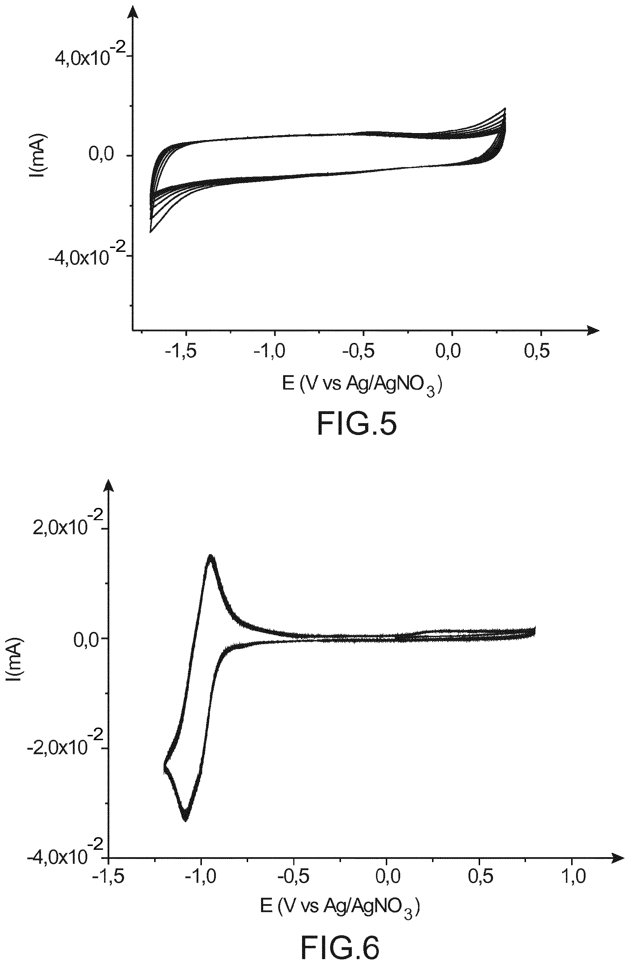

Après dégazage de l'électrolyte par barbotage de N₂, le système est soumis à une voltampérométrie cyclique, consistant à effectuer un cyclage entre -1,5 à +0,25 V/ Ag-Ag⁺ (10⁻³ M dans l'acétonitrile) à raison d'une vitesse de balayage de 100 mV.s⁻¹, le nombre de cycles effectué étant de 10, les courbes de cyclage étant représentées sur la figure 5 (I exprimée en mA en fonction du potentiel E exprimé en V)). L'on n'observe aucun pic sur ces courbes.

Pour l'essai B, les conditions expérimentales sont les suivantes.

Il est utilisé un système à trois électrodes comprenant :
- une électrode de travail constituée de carbone vitreux se présentant sous forme d'un disque de 3 mm de diamètre ;
- une contre-électrode en platine consistant en un fil de platine ;
- une électrode de référence consistant en un fil d'argent massif mis en contact avec une solution de AgNO₃ (10⁻³ M) dans l'acétonitrile ;
- un électrolyte consistant en de l'acétonitrile contenant du perchlorate de lithium LiClO₄(0,1 M) et de l'anthraquinone 10⁻³ M.

Après dégazage de l'électrolyte par barbotage de N₂, le système est soumis à une voltampérométrie cyclique, consistant à effectuer un cyclage entre -1,0 à +1,02 V/ Ag-Ag⁺ (10⁻³ M dans l'acétonitrile) à raison d'une vitesse de balayage de 100 mV.s⁻¹, le nombre de cycles effectué étant de 5, les courbes de cyclage étant représentées sur la figure 6 (I exprimée en mA en fonction du potentiel E exprimé en V)).

L'on observe des courbes classiques d'un système électrochimique réversible et présentant un pic de réduction à -1,10 V vs Ag/Ag⁺ attribuables aux fonctions carbonyles (vague de réduction de 2e⁻) du composé anthraquinone, ce pic, ramené au système Li/Li⁺ correspondant à un pic à +2,10 V.

Ainsi, l'on peut en déduire sans ambiguïté que, avec la pile bouton conforme à l'invention, le pic à +2,10 V est bien dû aux composés anthraquinones greffés à la surface des nanotubes de carbone.

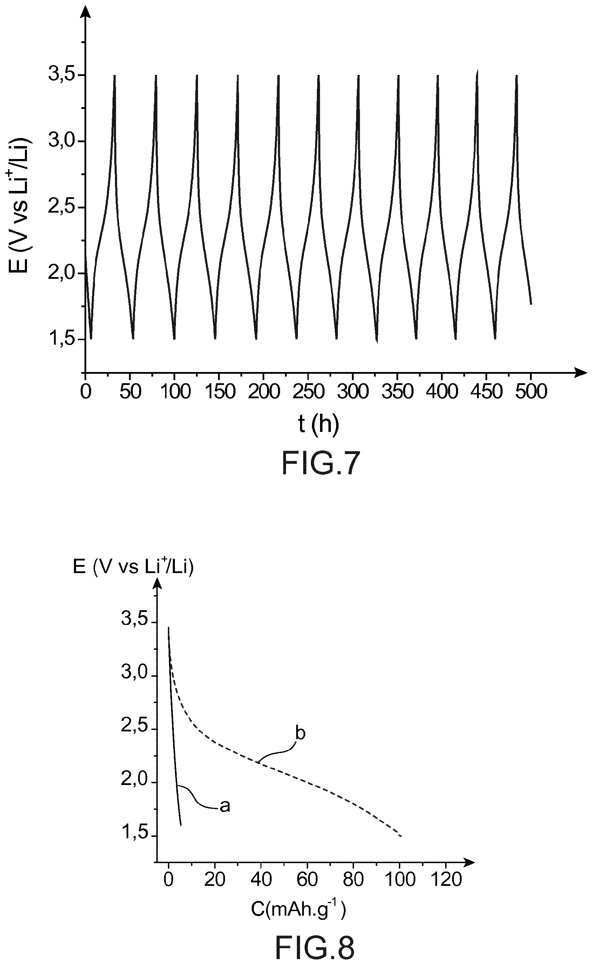

En parallèle, des profils de charge/décharge ont été enregistrés avec l'accumulateur conforme à l'invention préparé selon cet exemple, en appliquant un courant de 10 µA, ces profils étant reportés sur la figure 7. Les courbes de charge/décharge présentent un profil tout à fait similaire en fonction du temps, ce qui atteste de l'excellente tenue au cyclage.

A titre comparatif, des profils de charge/décharge ont été également effectués dans des conditions similaires à celles énoncées ci-dessus, si ce n'est qu'il a été utilisé comme matériau d'électrode des nanotubes de carbone non greffés, ce qui a permis de mettre en évidence l'apport significatif du composé anthraquinone greffé. En effet, des capacités spécifiques jusqu'à 20 fois supérieures ont pu être obtenues pour l'accumulateur conforme à l'invention.

Enfin, des tests en appliquant un courant de 10 µA (soit 5 mAh.g⁻¹ d'électrode) et en mesurant l'évolution du potentiel E (V vs Li⁺/Li) en fonction de la capacité de décharge (en mAh.g⁻¹ d'électrode) (courbe a) pour les piles à nanotubes non greffés et courbe b) pour les piles à nanotubes greffés (cf. figure 8) ont permis de déterminer que des capacités spécifiques jusqu'à 20 fois supérieures ont pu être obtenues pour les piles boutons utilisant des nanotubes greffés. Ainsi, des valeurs de l'ordre de 100 mAh.g⁻¹ d'électrode pour les piles utilisant des nanotubes greffés ont pu être observées, contre 5 mAh.g⁻¹ d'électride pour des piles utilisant des nanotubes non greffés. Le potentiel de fonctionnement étant situé autour de 2,2 V vs Li⁺/Li, une densité d'énergie massique d'environ 230 Wh.g⁻¹ peut être extrapolée.

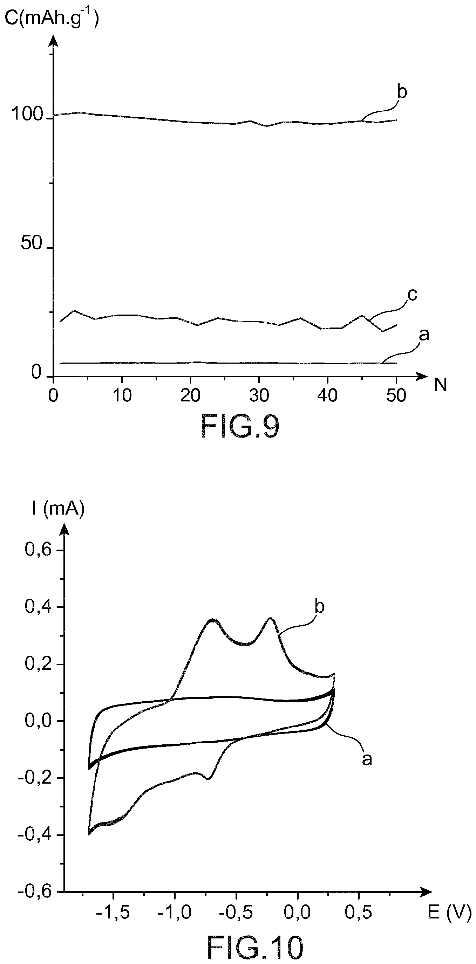

Pour finir, d'autres tests ont été réalisés avec les deux piles boutons susmentionnés et avec une troisième pile bouton dont l'électrode positive comprend un mélange comprenant des nanotubes non greffés et des molécules anthraquinones. Ces tests ont consisté à mesurer l'évolution de la capacité de décharge C (en mAh.g⁻¹ d'électrode) en fonction du nombre de cycles pour ces trois piles boutons et les résultats sont reportés sur la figure 9 (respectivement courbe a) pour les piles à nanotubes non greffés, courbe b) pour les piles à nanotubes greffés et courbe c) pour les piles à mélange (nanotubes non greffés+molécules anthraquinones).

La courbe c) indique l'obtention d'une capacité spécifique nettement plus faible (autour de 25 mAh.g⁻¹ d'électrode) pour des conditions expérimentales identiques. En effet, la matière active non greffée aux nanotubes se dissout partiellement dans l'électrolyte et entraîne une importante perte de capacité.

Au contraire, pour les échantillons de nanotubes fonctionnalisés de manière covalente avec la molécule anthraquinone (courbe b), une excellente stabilité est observée au bout de 50 cycles. D'autres tests ont permis de démontrer que cette capacité pouvait être maintenue à 80% de sa valeur initiale même après 800 cycles.

Des tests « post-mortem » ont également été réalisés avec les trois piles boutons susmentionnées, consistant à les dissocier pour analyser la couleur de l'électrolyte.

Pour la pile à nanotubes greffés et la pile à nanotubes non greffés, aucune coloration de l'électrolyte n'est observée.

Pour la pile à mélange (nanotubes non greffés+molécules soufrées), l'électrolyte a pris une coloration brune, signe de la dissolution de la molécule anthraquinone dans le solvant.

Ces tests confirment qu'il n'y pas de dissolution de la matière active dans le cas du greffage covalent de la molécule anthraquinone aux nanotubes de carbone.

Le nouveau matériau de cathode proposé préserve donc bien le système de la perte de capacité en cyclage en immobilisant la matière active à l'électrode positive.

En conclusion, l'accumulateur selon l'invention présente une excellente tenue au cyclage.

Le greffage covalent préserve le système de la perte de capacité en cyclage en immobilisant la matière active au niveau de l'électrode positive, ce qui signifie, en d'autres termes, qu'il n'y a pas de dissolution de la matière active dans l'électrolyte, contrairement aux autres systèmes de l'art antérieur.

### EXEMPLE 3

Cet exemple illustre la préparation d'un composé comprenant un groupe précurseur d'un groupe électroattracteur disulfure et comprenant un groupe diazonium, lequel composé est apte à être greffé, de manière covalente, à un matériau carboné, tel que des nanotubes de carbone.

Ce composé répond à la formule suivante :

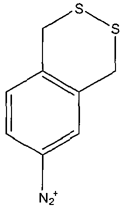

Le schéma réactionnel de préparation est le suivant :

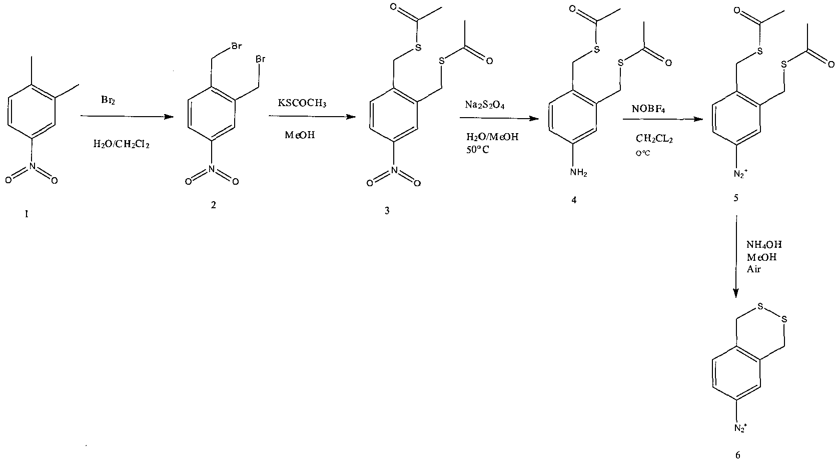

Après dissolution du 1,2-diméthyl-4-nitrobenzène (composé 1 ; 5 g) dans un mélange eau/dichlorométhane (50/50), deux équivalents de Br₂ (3,4 mL) sont ajoutés. La solution est agitée pendant 48 heures. Après extraction, la phase organique est séchée avec du Na₂SO₄. Le solvant organique est évaporé et le produit est séché sous vide. Le composé noté 2 sur le schéma réactionnel ci-dessus est obtenu sous forme de cristaux jaune clair.

Le composé 2 (4 g) est ensuite dissous dans du méthanol (100 mL). Au mélange résultant est ajouté un excès de KSCOCH₃ (4,4 g ; 3 équivalents). Le tout est agité pendant 4 heures. Le solvant organique est ensuite évaporé. Le produit résultant est redissous dans du dichlorométhane (100 mL) et lavé à l'eau. Après extraction, la phase organique est séchée avec du Na₂SO₄. Le solvant organique est évaporé et le produit est purifié sur colonne de silice (cyclohexane/acétate d'éthyle 10 :1). Le composé noté 3 sur le schéma réactionnel ci-dessus est ainsi obtenu.

Le composé 3 (1,9 g) est ensuite dissous dans un mélange eau/éthanol 50/50. Au mélange résultant est ajouté un excès de Na₂S₂O₄ (5 g). Le tout est agité pendant 12 heures à 50°C. Après extraction, la phase organique est séchée avec du Na₂SO₄. Le solvant organique est évaporé et le produit est purifié sur colonne de silice (dichlorométhane/méthanol 99 :1). Le composé noté 4 sur le schéma réactionnel ci-dessus est ainsi obtenu.

Le composé 5 est obtenu par réaction du composé 4 (2 g) avec du NOBF₄ (1,3 g) dans du dichlorométhane à 0°C pendant 2 heures. Le solvant est évaporé et le produit résultant est séché sous vide.

Le composé 6 peut être obtenu, avant greffage, par réaction avec une solution d'hydroxyde de méthanol sous air.

Ensuite, des nanotubes de carbone ont été fonctionnalisés par une méthode de greffage chimique similaire à celle exposée à l'exemple 1 pour l'anthraquinone, deux voies de fonctionnalisation ayant été explorées :
- une voie de fonctionnalisation par greffage du composé 5 sur des nanotubes de carbone, le greffage étant suivi d'un transformation des groupes -S(COCH₃) en ponts disulfures par réaction avec une solution d'hydroxyde de méthanol sous air (dite Voie I) ;
- une voie de fonctionnalisation par greffage du composé 6 directement sur des nanotubes de carbone (dite Voie II).

Pour ces deux voies, un suivi par spectrométrie de photoélectrons induits par rayons X (dit spectrométrie XPS) a été réalisé avant et après greffage. Alors que le soufre n'est pas détecté sur des nanotubes non fonctionnalisés, une quantité substantielle est détectée après greffage (5%), notamment avec la présence majoritaire d'un signal attribuable aux atomes dé soufre liés aux atomes de carbone dans la molécule greffée.

Après fonctionnalisation des nanotubes avec la molécule soufrée, pour ces deux voies, les échantillons greffés et non greffés ont été observés au microscope électronique à balayage, mettant en évidence la formation d'un polymère greffé autour des nanotubes de carbone pour les échantillons greffés, ce polymère greffé répondant, pour les nanotubes de carbone obtenus par la voie II, à la formule suivante : 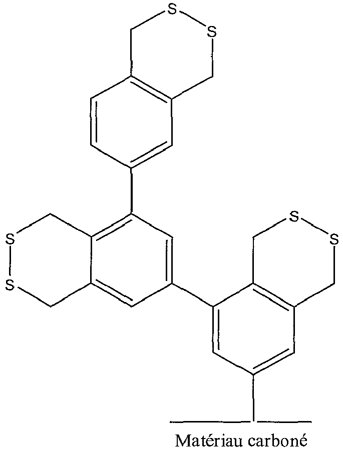 un seul composé greffé ayant été représenté, pour des raisons de simplification, sur la formule ci-dessus, sachant qu'il s'entend que plusieurs composés de ce type sont greffés, de manière covalente, aux nanotubes de carbone.

### EXEMPLE 4

Dans cet exemple, il a été étudié, dans un premier temps, la signature électrochimique des nanotubes de carbone avant et après greffage par voltampérométrie cyclique, les nanotubes greffés testés étant ceux de la voie II mentionnée à l'exemple 3 ci-dessus.

Pour ce faire, un système à trois électrodes a été utilisé, lequel système comprend :
- une électrode de travail constituée de nanotubes de carbones greffés ou non greffés, ladite électrode se présentant sous forme d'un disque de 16 mm de diamètre et de 10-20 micromètres d'épaisseur ;
- une contre-électrode en platine consistant en un fil de platine ;
- une électrode de référence consistant en un fil d'argent massif mis en contact avec une solution de AgNO₃ (10⁻³ M) dans l'acétonitrile ;
- un électrolyte consistant en de l'acétonitrile contenant du perchlorate de lithium LiClO₄(0,1 M).

Après dégazage de l'électrolyte par barbotage de N₂, le système est soumis à une voltampérométrie cyclique, consistant à effectuer un cyclage entre -1,5 à +0,25 V/ Ag-Ag⁺ (10⁻³ M dans l'acétonitrile) à raison d'une vitesse de balayage de 100 mV.s⁻¹, les courbes de cyclage (I exprimée en mA en fonction du potentiel E exprimé en V)) étant représentées sur la figure 10 (courbe a) pour avec le système à nanotubes non greffés et courbe b) avec le système à nanotubes greffés).

Pour le système à nanotubes non greffés, aucune activité n'est observée (courbe a).

Pour le système à nanotubes de carbone greffés, deux pics de réduction et deux pics de réoxydation sont observés (courbe b), correspondant à la réduction et à la réoxydation du pont disulfure au niveau de la molécule soufrée, autrement dit à l'ouverture et à la refermeture de ce pont. Ces résultats confirment l'efficacité de la méthode de greffage ainsi que l'activité électrochimique de la molécule soufrée greffée.

Dans un deuxième temps, des tests ont été réalisés avec deux piles boutons, respectivement une pile bouton comprenant, comme électrode positive, une électrode formée de nanotubes de carbone greffés et une pile bouton comprenant, comme électrode positive, une électrode formée de nanotubes de carbone non greffés, les piles boutons répondant, par ailleurs, aux mêmes spécificités que celles décrites à l'exemple 2.

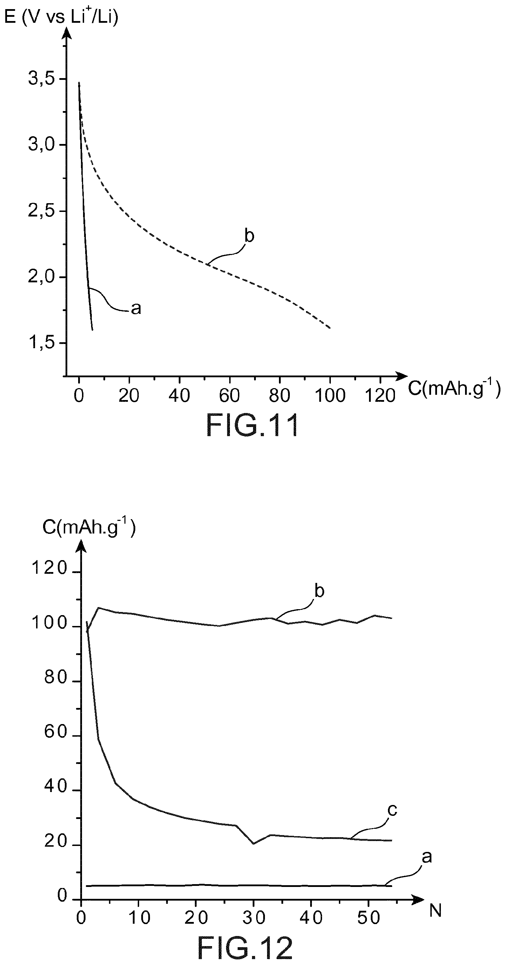

Dans les tests, un courant de 10 µA est imposé. Des capacités spécifiques jusqu'à 20 fois supérieures ont pu être obtenues pour les piles boutons utilisant des nanotubes greffés, comme l'atteste la figure 11, qui illustre l'évolution du potentiel E (V vs Li⁺/Li) en fonction de la capacité de décharge (en mAh.g⁻¹ d'électrode) (courbe a) pour les piles à nanotubes non greffés et courbe b) pour les piles à nanotubes greffés). Ainsi, des valeurs de l'ordre de 100 mAh.g⁻¹ d'électrode pour les piles utilisant des nanotubes greffés ont pu être observées, contre 5 mAh.g⁻¹ d'électrode pour les piles utilisant des nanotubes non greffés. Le potentiel de fonctionnement étant situé autour de 2,3 V vs Li⁺/Li, une densité d'énergie massique d'environ 230 Wh.g⁻¹ peut être extrapolée. L'analyse couplée de ces résultats et des résultats XPS a permis d'établir que l'intégralité des ponts disulfures greffés est impliquée dans le processus redox en cours de cyclage.

Dans un troisième temps, d'autres tests ont été réalisés avec les deux piles boutons susmentionnées et avec une troisième pile bouton dont l'électrode positive comprend un mélange entre des nanotubes non greffés et des molécules soufrées de formule (6) définie à l'exemple 3. Ces tests ont consisté à mesurer l'évolution de la capacité de décharge C (en mAh.g⁻¹ d'électrode) en fonction du nombre de cycles pour ces trois piles boutons et les résultats sont reportés sur la figure 12 (respectivement courbe a) pour les piles à nanotubes non greffés, courbe b) pour les piles à nanotubes greffés et courbe c) pour les piles à mélange (nanotubes non greffés+molécules soufrées).

Pour la courbe c), une diminution très importante de la capacité spécifique est observée lors des 5 premiers cycles, celle-ci passant de 100 à environ 40 mAh.g⁻¹ d'électrode. Cette diminution est due à la dissolution d'une partie importante de la matière active dans l'électrolyte. La diminution, bien que nettement moins forte, se poursuit lors des cycles suivants. Au contraire, pour les échantillons de nanotubes fonctionnalisés de manière covalente avec la molécule soufrée, une excellente stabilité est observée, avec 95% de la capacité initiale maintenus après 50 cycles.

Des tests « post-mortem » ont également été réalisés avec les trois piles boutons susmentionnées, consistant à les dissocier pour analyser la couleur de l'électrolyte.

Pour la pile à nanotubes greffés et la pile à nanotubes non greffés, aucune coloration de l'électrolyte n'est observée.

Pour la pile à mélange (nanotubes non greffés+molécules soufrées), l'électrolyte a pris une coloration marron-vert, signe de la dissolution de la molécule soufrée dans le solvant.

Ces tests confirment qu'il n'y pas de dissolution de la matière active dans le cas du greffage covalent de la molécule soufrée aux nanotubes de carbone.

Le nouveau matériau de cathode proposé préserve donc bien le système de la perte de capacité en cyclage en immobilisant la matière active à l'électrode positive.

## Revendications

1. Accumulateur au lithium comprenant au moins une cellule électrochimique comprenant un électrolyte disposé entre une électrode positive et une électrode négative, ladite électrode positive comprenant un matériau d'électrode positive comprenant un matériau carboné choisi parmi les nanotubes de carbone, le graphène ou les dérivés de graphène choisis parmi les oxydes de graphène, les oxydes de graphène réduits, lequel matériau carboné est fonctionnalisé de manière covalente par au moins un composé organique comprenant au moins un groupe électroattracteur.

2. Accumulateur au lithium selon la revendication 1, dans lequel le composé organique comprenant au moins un groupe électroattracteur est un composé comprenant un ou plusieurs groupes cycliques, dont l'un au moins de ces groupes est porteur d'au moins un groupe électroattracteur.

3. Accumulateur au lithium selon la revendication 1 ou 2, dans lequel le groupe électroattracteur est choisi parmi les groupes carbonyles, les groupes disulfures, les groupes thiocarbonyles.

4. Accumulateur au lithium selon l'une quelconque des revendications précédentes, dans lequel, lorsque le groupe électroattracteur est un groupe carbonyle, il est conjugué avec une double liaison.

5. Accumulateur au lithium selon l'une quelconque des revendications précédentes, dans lequel, lorsque le groupe électroattracteur est un groupe carbonyle, le composé organique comprenant un tel groupe électroattracteur est un composé quinonique.

6. Accumulateur au lithium selon la revendication 5, dans lequel le composé quinonique est choisi parmi :
- les composés benzoquinones, tels que ceux de formules (I) et (II) suivantes : 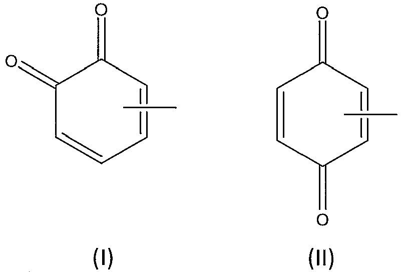
- les composés napthoquinones, tels que celui de formule (III) suivante : 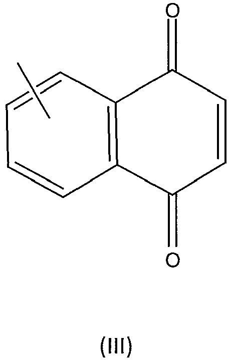
- les composés anthraquinones, tels que celui de formule (IV) suivante : 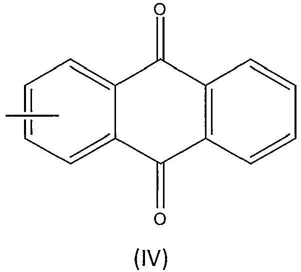
- les composés phénanthrènequinones, tels que celui de formule (V) suivante : 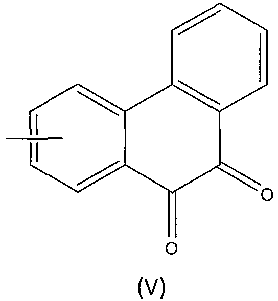
les liaisons situées au milieu des liaisons carbone-carbone indiquant que l'attachement au matériau carboné du composé concerné se fait par l'un quelconque des atomes de carbone constitutif du ou des cycles benzéniques.

7. Accumulateur au lithium selon la revendication 5, dans lequel le composé quinonique est un composé de formule (VI) suivante : 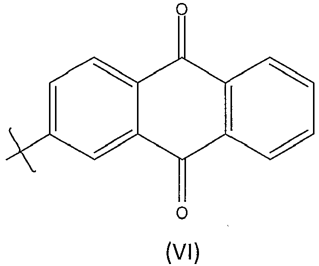 la liaison entrecoupée d'une accolade indiquant que l'attachement du composé concerné par covalence au matériau carboné s'effectue *via* cette liaison.

8. Accumulateur au lithium selon l'une quelconque des revendications 1 à 5, dans lequel, lorsque le groupe électroattracteur est un groupe carbonyle, le composé comprenant un tel groupe est un composé du type « polymère » comprenant au moins un motif répétitif, lequel motif répétitif comprend un ou plusieurs cycles, dont l'un de ces cycles est un cycle comprenant au moins un groupe carbonyle.

9. Accumulateur au lithium selon la revendication 8, dans lequel le composé comprend au moins un motif répétitif de la famille des quinones, tels que des anthraquinones.

10. Accumulateur au lithium selon l'une quelconque des revendications 1 à 3, dans lequel, lorsque le groupe électroattracteur est un groupe disulfure, le composé comprenant un tel groupe est un composé cyclique comportant un ou plusieurs cycles, dans lequel au moins un cycle comporte un groupe disulfure.

11. Accumulateur au lithium selon la revendication 10, dans lequel le composé cyclique comportant un ou plusieurs cycles, dans lequel au moins un cycle comporte un groupe disulfure et comporte 4 atomes étant entendu que deux de ces atomes sont des atomes de soufre.

12. Accumulateur au lithium selon la revendication 10, dans lequel le composé cyclique comportant un ou plusieurs cycles, dans lequel au moins un cycle comporte un groupe disulfure est un composé cyclique comprenant au moins un cycle aromatique accolé à au moins un cycle comprenant un groupe disulfure.

13. Accumulateur au lithium la revendication 10, dans lequel le composé cyclique comportant un ou plusieurs cycles, dans lequel au moins un cycle comporte un groupe disulfure est un composé répondant à l'une des formules (VII) à (X) suivantes : 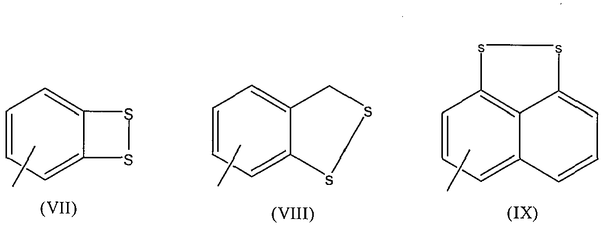 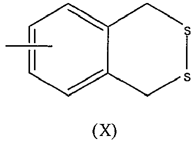 la liaison entrecoupant la liaison carbone-carbone indiquant que la liaison entre le ou les cycles benzéniques et le matériau carboné se fait par l'un des atomes de carbone de ce ou ces cycles.

14. Accumulateur au lithium selon l'une quelconque des revendications 1 à 3, dans lequel, lorsque le groupe électroattracteur est un groupe disulfure, le composé comprenant un tel groupe est un composé du type « polymère » comprenant au moins un motif répétitif, lequel motif répétitif comprend un ou plusieurs cycles, dont l'un de ces cycles est un cycle comprenant un groupe disulfure.

15. Accumulateur au lithium selon la revendication 14, dans lequel le composé comprend au moins un motif répétitif répondant à l'une des formules (XI) à (XV) suivantes : 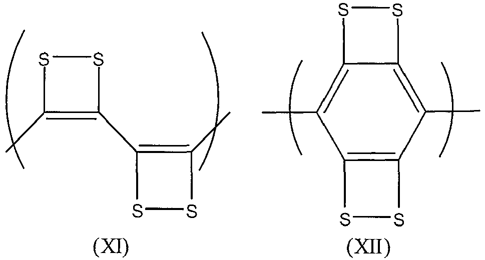 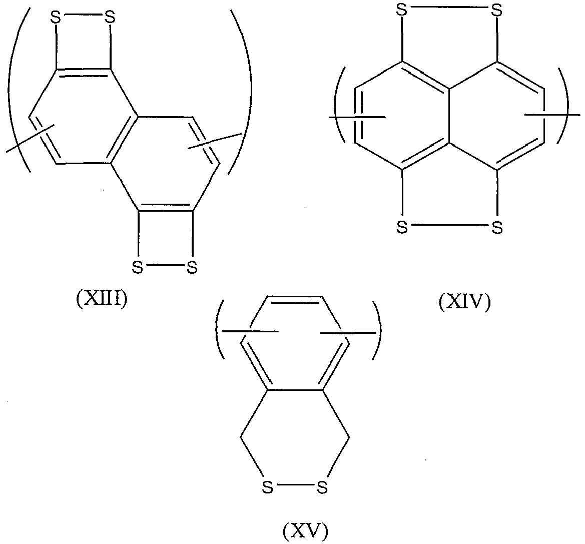 lesdits motifs répétitifs pouvant être liés au matériau carboné via un groupe organique formant pont entre le motif répétitif concerné et le matériau carboné.

16. Matériau d'électrode positive pour accumulateur au lithium comprenant un matériau carboné choisi parmi les nanotubes de carbone, le graphène ou les dérivés de graphène choisis parmi les oxydes de graphène, les oxydes de graphène réduits, lequel matériau carboné est fonctionnalisé de manière covalente par au moins un composé organique comprenant au moins un groupe électroattracteur, qui est un groupe disulfure.

17. Matériau d'électrode positive selon la revendication 16, dans lequel le composé comprenant un groupe disulfure est un composé cyclique comportant un ou plusieurs cycles, dans lequel au moins un cycle comporte un groupe disulfure.

18. Matériau d'électrode positive selon la revendication 16 ou 17, dans lequel le composé comprenant un groupe disulfure est un composé cyclique comportant un ou plusieurs cycles, dans lequel au moins un cycle comporte un groupe disulfure et comporte 4 atomes étant entendu que deux de ces atomes sont des atomes de soufre.

19. Matériau d'électrode positive selon l'une quelconque des revendications 16 à 18, dans lequel le composé comprenant un groupe disulfure est un composé cyclique comprenant au moins un cycle aromatique accolé à au moins un cycle comprenant un groupe disulfure.

20. Matériau d'électrode positive selon l'une quelconque des revendications 16 à 19, dans lequel le composé comprenant un groupe disulfure est un composé répondant à l'une des formules (VII) à (X) suivantes : 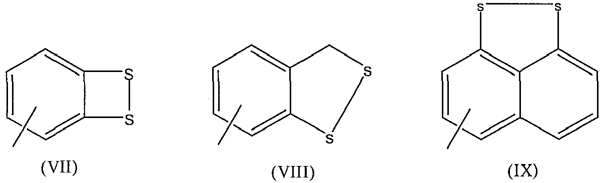 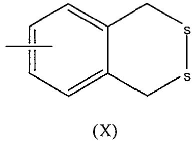 la liaison entrecoupant la liaison carbone-carbone indiquant que la liaison entre le ou les cycles benzéniques et le matériau carboné se fait par l'un des atomes de carbone de ce ou ces cycles.

21. Matériau d'électrode positive selon la revendication 16, dans lequel le composé comprenant un groupe disulfure est un composé du type « polymère » comprenant au moins un motif répétitif, lequel motif répétitif comprend un ou plusieurs cycles, dont l'un de ces cycles est un cycle comprenant un groupe disulfure.

22. Matériau d'électrode positive selon la revendication 21, dans lequel le composé comprend au moins un motif répétitif répondant à l'une des formules (XI) à (XV) suivantes : 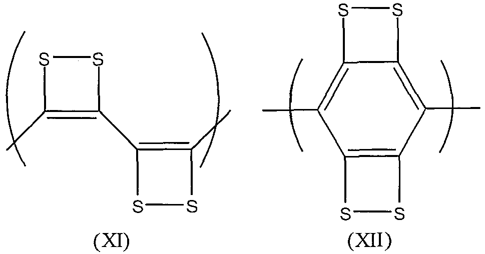 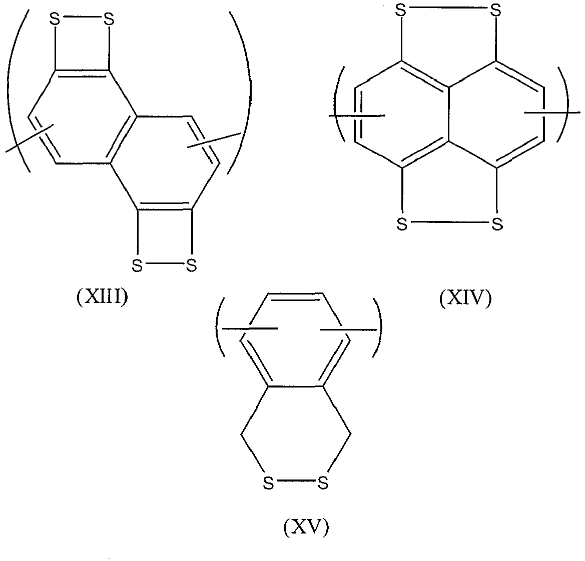 lesdits motifs répétitifs pouvant être liés au matériau carboné via un groupe organique formant pont entre le motif répétitif concerné et le matériau carboné.

23. Electrode positive comprenant un matériau d'électrode positive comprenant un matériau tel que défini selon l'une quelconque des revendications 16 à 22.

## Patentansprüche

1. Lithium-Akkumulator, enthaltend zumindest eine elektrochemische Zelle mit einem Elektrolyten, der zwischen einer positiven Elektrode und einer negativen Elektrode angeordnet ist, wobei die positive Elektrode ein positives Elektrodenmaterial mit einem kohlenstoffhaltigen Material enthält, das ausgewählt ist aus Kohlenstoffnanoröhren, Graphen bzw. Graphen-Derivaten, die ausgewählt sind aus Graphen-Oxiden und reduzierten Graphen-Oxiden, welches kohlenstoffhaltige Material über zumindest eine organische Verbindung mit zumindest einer elektronenziehenden Gruppe in kovalenter Weise funktionalisiert ist.

2. Lithium-Akkumulator nach Anspruch 1, wobei die organische Verbindung mit der zumindest einen elektronenziehenden Gruppe eine Verbindung ist, die ein oder mehrere cyclische Gruppen aufweist, von denen zumindest eine dieser Gruppen Träger von zumindest einer elektronenziehenden Gruppe ist.

3. Lithium-Akkumulator nach Anspruch 1 oder 2, wobei die elektronenziehende Gruppe ausgewählt ist aus Carbonylgruppen, Disulfidgruppen, Thiocarbonylgruppen.

4. Lithium-Akkumulator nach einem der vorangehenden Ansprüche, wobei dann, wenn die elektronenziehende Gruppe eine Carbonylgruppe ist, sie mit einer Doppelbindung konjugiert ist.

5. Lithium-Akkumulator nach einem der vorangehenden Ansprüche, wobei dann, wenn die elektronenziehende Gruppe eine Carbonylgruppe ist, die organische Verbindung mit einer solchen elektronenziehenden Gruppe eine Chinonverbindung ist.

6. Lithium-Akkumulator nach Anspruch 5, wobei die Chinonverbindung ausgewählt ist aus:
- Benzochinonverbindungen, wie etwa die der nachfolgenden Formeln (I) und (II): 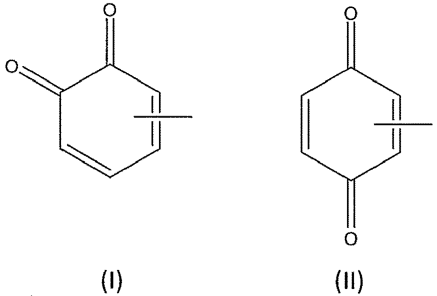
- Naphthochinonverbindungen, wie etwa die der nachfolgenden Formel (III): 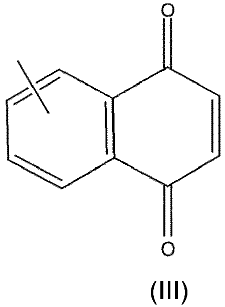
- Anthrachinonverbindungen, wie etwa die der nachfolgenden Formel (IV): 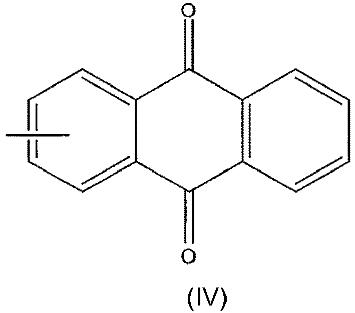
- Phenanthrenchinonverbindungen, wie etwa die der nachfolgenden Formel (V): 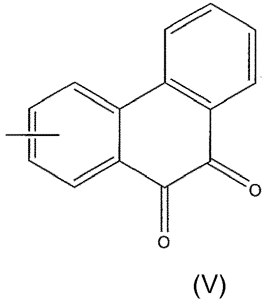
wobei die in der Mitte der Kohlenstoff-Kohlenstoff-Bindungen liegenden Bindungen angeben, dass die Anbindung der betreffenden Verbindung an das kohlenstoffhaltige Material über ein beliebiges der Kohlenstoffatome erfolgt, das den Benzolring bzw. die Benzolringe bildet.

7. Lithium-Akkumulator nach Anspruch 5, wobei die Chinonverbindung eine Verbindung der nachfolgenden Formel (VI) ist: 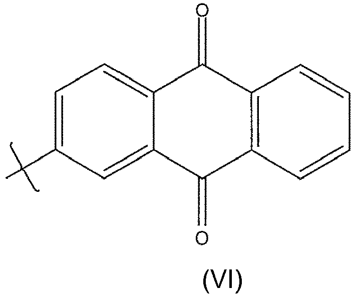 wobei die mit einer Klammer durchzogene Bindung angibt, dass die Anbindung der betreffenden Verbindung durch Kovalenz an das kohlenstoffhaltige Material *über (via)* diese Bindung erfolgt.

8. Lithium-Akkumulator nach einem der Ansprüche 1 bis 5, wobei dann, wenn die elektronenziehende Gruppe eine Carbonylgruppe ist, die Verbindung mit einer solchen Gruppe eine Verbindung vom Typ "Polymer" mit zumindest einer Wiederholungseinheit ist, wobei die Wiederholungseinheit einen oder mehrere Ringe enthält, von denen einer dieser Ringe ein Ring mit zumindest einer Carbonylgruppe ist.

9. Lithium-Akkumulator nach Anspruch 8, wobei die Verbindung zumindest eine Wiederholungseinheit aus der Familie der Chinone enthält, wie etwa aus den Anthrachinonen.

10. Lithium-Akkumulator nach einem der Ansprüche 1 bis 3, wobei dann, wenn die elektronenziehende Gruppe eine Disulfidgruppe ist, die Verbindung mit einer solchen Gruppe eine cyclische Verbindung ist, die einen oder mehrere Ringe enthält, wobei zumindest ein Ring eine Disulfidgruppe enthält.

11. Lithium-Akkumulator nach Anspruch 10, wobei die cyclische Verbindung mit einem oder mehreren Ringen, wovon zumindest ein Ring eine Disulfidgruppe enthält, 4 Atome enthält, wobei sich versteht, dass zwei dieser Atome Schwefel-Atome sind.

12. Lithium-Akkumulator nach Anspruch 10, wobei die cyclische Verbindung mit einem oder mehreren Ringen, wovon zumindest ein Ring eine Disulfidgruppe enthält, eine cyclische Verbindung ist, die zumindest einen aromatischen Ring enthält, der an zumindest einen Ring mit einer Disulfidgruppe ankondensiert ist.

13. Lithium-Akkumulator nach Anspruch 10, wobei die cyclische Verbindung mit einem oder mehreren Ringen, wovon zumindest ein Ring eine Disulfidgruppe enthält, eine Verbindung ist, die einer der nachfolgenden Formeln (VII) bis (X) entspricht: 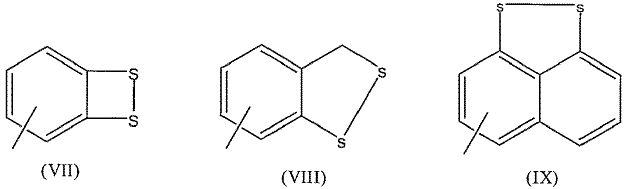 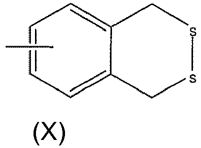 wobei die die Kohlenstoff-Kohlenstoff-Bindung durchsetzende Bindung angibt, dass die Bindung zwischen dem Benzolring bzw. den Benzolringen und dem kohlenstoffhaltigen Material über eines der Kohlenstoffatome dieses Rings bzw. dieser Ringe erfolgt.

14. Lithium-Akkumulator nach einem der Ansprüche 1 bis 3, wobei dann, wenn die elektronenziehende Gruppe eine Disulfidgruppe ist, die Verbindung mit einer solchen Gruppe eine Verbindung vom Typ "Polymer" mit zumindest einer Wiederholungseinheit ist, wobei die Wiederholungseinheit einen oder mehrere Ringe enthält, von denen einer dieser Ring ein Ring mit zumindest einer Disulfidgruppe ist.

15. Lithium-Akkumulator nach Anspruch 14, wobei die Verbindung zumindest eine Wiederholungseinheit enthält, die einer der nachfolgenden Formeln (XI) bis (XV) entspricht: 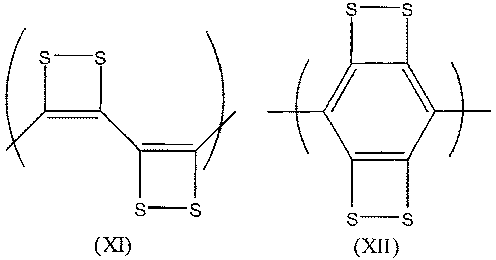 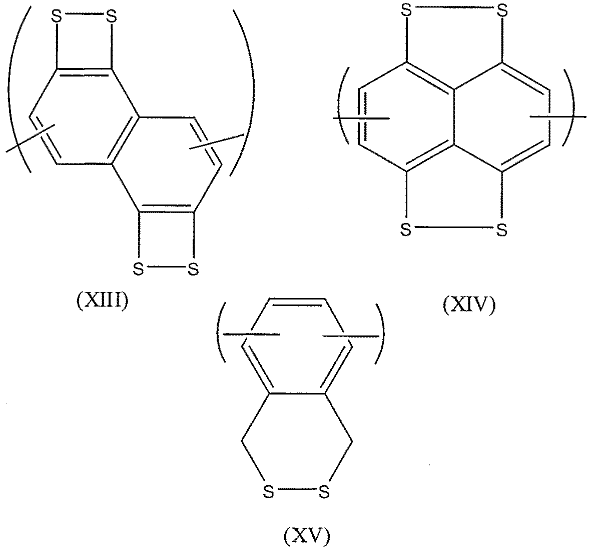 wobei die Wiederholungseinheiten mit dem kohlenstoffhaltigen Material über eine organische Gruppe verbunden sein können, die eine Brücke zwischen der betreffenden Wiederholungseinheit und dem kohlenstoffhaltigen Material bildet.

16. Positives Elektrodenmaterial für einen Lithium-Akkumulator, enthaltend ein kohlenstoffhaltiges Material, das ausgewählt ist aus Kohlenstoffnanoröhren, Graphen bzw. Graphen-Derivaten, die ausgewählt sind aus Graphen-Oxiden und reduzierten Graphen-Oxiden, welches kohlenstoffhaltige Material über zumindest eine organische Verbindung mit zumindest einer elektronenziehenden Gruppe, die eine Disulfidgruppe ist, in kovalenter Weise funktionalisiert ist.

17. Positives Elektrodenmaterial nach Anspruch 16, wobei die Verbindung mit einer Disulfidgruppe eine cyclische Verbindung mit einem oder mehreren Ringen ist, wovon zumindest ein Ring eine Disulfidgruppe enthält.

18. Positives Elektrodenmaterial nach Anspruch 16 oder 17, wobei die Verbindung mit einer Disulfidgruppe eine cyclische Verbindung mit einem oder mehreren Ringen ist, wovon zumindest ein Ring eine Disulfidgruppe enthält, und 4 Atome enthält, wobei sich versteht, dass zwei dieser Atome Schwefel-Atome sind.

19. Positives Elektrodenmaterial nach einem der Ansprüche 16 bis 18, wobei die Verbindung mit einer Disulfidgruppe eine cyclische Verbindung ist, die zumindest einen aromatischen Ring enthält, der an zumindest einen Ring mit einer Disulfidgruppe ankondensiert ist.

20. Positives Elektrodenmaterial nach einem der Ansprüche 16 bis 19, wobei die Verbindung mit einer Disulfidgruppe eine Verbindung ist, die einer der nachfolgenden Formeln (VII) bis (X) entspricht: 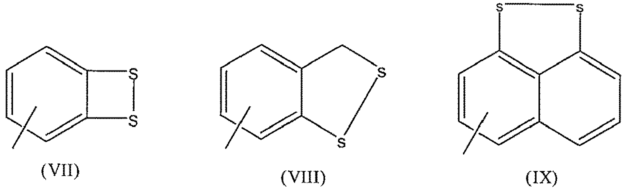 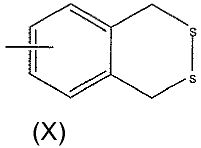 wobei die die Kohlenstoff-Kohlenstoff-Bindung durchsetzende Bindung angibt, dass die Bindung zwischen dem Benzolring bzw. den Benzolringen und dem kohlenstoffhaltigen Material über eines der Kohlenstoffatome dieses Rings bzw. dieser Ringe erfolgt.

21. Positives Elektrodenmaterial nach Anspruch 16, wobei die Verbindung mit einer Disulfidgruppe eine Verbindung vom Typ "Polymer" mit zumindest einer Wiederholungseinheit ist, wobei die Wiederholungseinheit einen oder mehrere Ringe enthält, von denen einer dieser Ringe ein Ring mit einer Disulfidgruppe ist.

22. Positives Elektrodenmaterial nach Anspruch 21, wobei die Verbindung zumindest eine Wiederholungseinheit enthält, die einer der nachfolgenden Formeln (XI) bis (XV) entspricht: 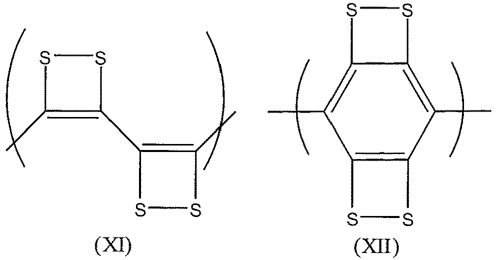 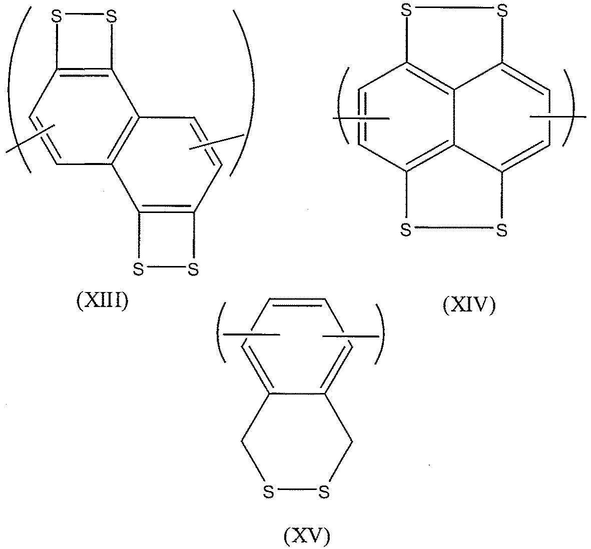 wobei die Wiederholungseinheiten mit dem kohlenstoffhaltigen Material über eine organische Gruppe verbunden sein können, die eine Brücke zwischen der betreffenden Wiederholungseinheit und dem kohlenstoffhaltigen Material bildet.

23. Positive Elektrode mit einem positiven Elektrodenmaterial, enthaltend ein Material wie nach einem der Anspruche 16 bis 22 definiert.

## Claims

1. A lithium accumulator comprising at least one electrochemical cell comprising an electrolyte positioned between a positive electrode and a negative electrode, said positive electrode comprising a positive electrode material comprising a carbonaceous material selected from carbon nanotubes, graphene or derivatives of graphene selected from graphene oxides, reduced graphene oxides, said carbonaceous material is covalently functionalized by at least one organic compound comprising at least one electron attractor group.

2. The lithium accumulator according to claim 1, wherein the organic compound comprising at least one electron attractor group is a compound comprising one or several cyclic groups, for which at least one of these groups bears at least one electron attractor group.

3. The lithium accumulator according to claim 1 or 2, wherein the electron attractor group is selected from carbonyl groups, disulfide groups, thiocarbonyl groups.

4. The lithium accumulator according to any of the preceding claims, wherein, when the electron attractor group is a carbonyl group, it is conjugated with a double bond.

5. The lithium accumulator according to any of the preceding claims, wherein, when the electron attractor group is a carbonyl group, the organic compound comprising such an electron attractor group is a quinone compound.

6. The lithium accumulator according to claim 5, wherein the quinone compound is selected from:
- benzoquinone compounds, such as those of the following formulae (I) and (II): 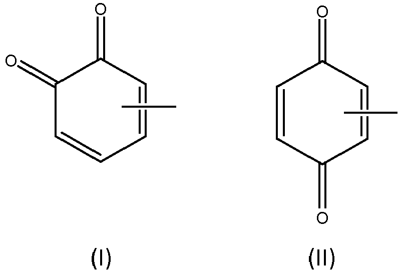
- naphthoquinone compounds, such as the one of the following formula (III): 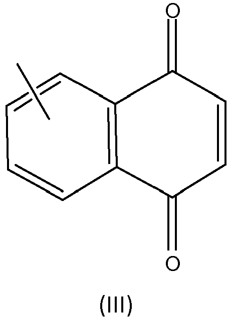
- anthraquinone compounds, such as the one of the following formula (IV): 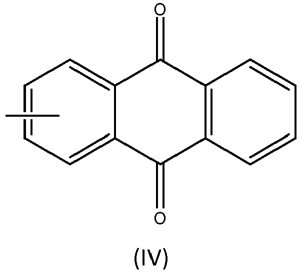
- phenanthrenequinone compounds, such as the one of the following formula (V): 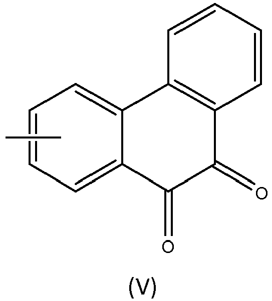
The bonds located at the middle of the carbon-carbon bonds indicating that the attachment to the carbonaceous material of the relevant compound is ensured by any of the carbon atoms making up the benzene ring(s).

7. The lithium accumulator according to claim 5, wherein the quinone compound is a compound of the following formula (VI): 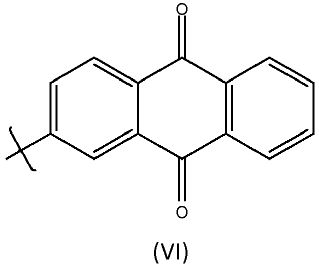 the bond intercepted with a bracket indicating that the attachment of the relevant compound by covalence to the carbonaceous material is carried out via this bond.

8. The lithium accumulator according to any of claims 1 to 5, wherein, when the electron attractor group is a carbonyl group, the compound comprising such group is a compound of the « polymer » type comprising at least one recurrent unit, said recurrent unit comprises one or several rings, for which one of these rings is a ring comprising at least one carbonyl group.

9. The lithium accumulator according to claim 8, wherein the compound comprises at least one recurrent unit from the family of quinones, such as anthraquinones.

10. The lithium accumulator according to any of claims 1 to 3, wherein, when the electron attractor group is a disulfide group, the compound comprising such a group is a cyclic compound including one or several rings, wherein at least one ring includes a disulfide group.

11. The lithium accumulator according to claim 10, wherein the compound is a cyclic compound including one or several rings, wherein at least one ring includes a disulfide group and includes 4 atoms, it being understood that two of these atoms are sulfur atoms.

12. The lithium accumulator according to claim 10, wherein the cyclic compound comprising one or several rings, wherein at least one ring includes a disulfide group, is a cyclic compound comprising at least one aromatic ring beside at least one ring comprising a disulfide group.

13. The lithium accumulator according to claim 10, wherein the cyclic compound comprising one or several rings, wherein at least one ring includes a disulfide group, is a compound fitting one of the following formulae (VII) to (X): 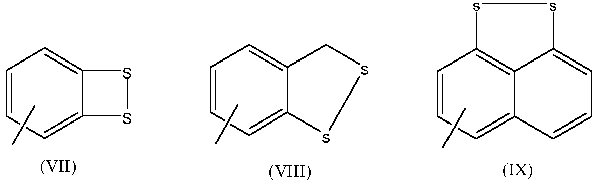 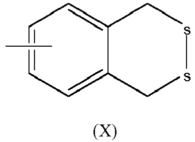 the bond intercepting the carbon-carbon bond indicating that the bond between the benzene ring(s) and the carbonaceous material is ensured through one of the carbon atoms of this or these ring(s).

14. The lithium accumulator according to any of claims 1 to 3, wherein, when the electron attractor group is a disulfide group, the compound comprising such a group is a compound of the «polymer» type comprising at least one recurrent unit, which recurrent unit comprises one or several rings, for which one of these rings is a ring comprising a disulfide group.

15. The lithium accumulator according to claim 14, wherein the compound comprises at least one recurrent unit fitting one of the following formulae (XI) to (XV): 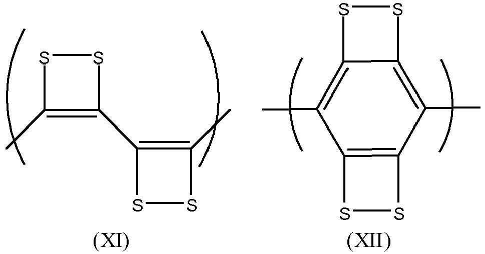 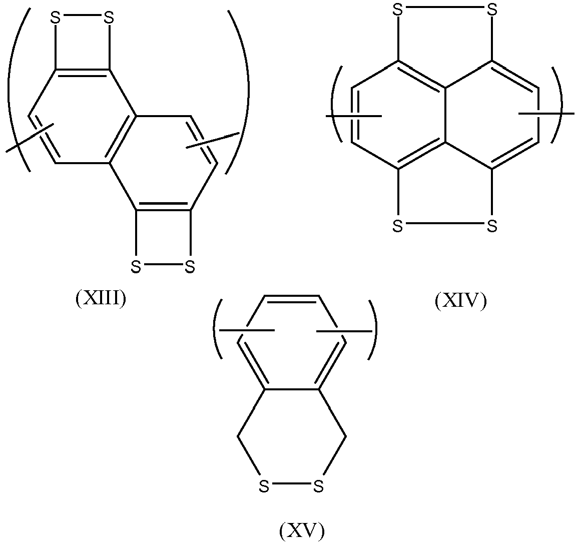 said recurrent units may be bound to the carbonaceous material via an organic group forming a bridge between the relevant recurrent unit and the carbonaceous material.

16. A positive electrode material for a lithium accumulator comprising a carbonaceous material selected from carbon nanotubes, graphene or derivatives of graphene selected from graphene oxides, reduced graphene oxides, said carbonaceous material is covalently functionalized by at least one organic compound comprising at least one electron attractor group, which is a disulfide group.

17. The positive electrode material according to claim 16, wherein the compound comprising a disulfide group is a cyclic compound including one or several rings, wherein at least one ring includes a disulfide group.

18. The positive electrode material according to claim 16 or 17, wherein the compound comprising a disulfide group is a cyclic compound including one or several rings, wherein at least one ring includes a disulfide group and includes 4 atoms, it being understood that two of these atoms are sulfur atoms.

19. The positive electrode material according to any of claims 16 to 18, wherein the compound comprising a disulfide group is a cyclic compound comprising at least one aromatic ring beside at least one ring comprising a disulfide group.

20. The positive electrode material according to any of claims 16 to 19, wherein the compound comprising a disulfide group is a compound fitting one of the following formulae (VII) to (X): 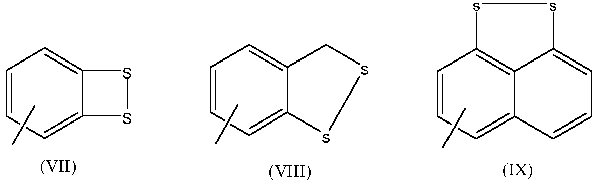 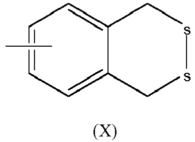 the bond intercepting the carbon-carbon bond indicating that the bond between the benzene ring(s) and the carbonaceous material is ensured by one of the carbon atoms of this or these ring(s).

21. The positive electrode material according to claim 16, wherein the compound comprising a disulfide group is a compound of the «polymertype comprising at least one recurrent unit, said recurrent unit comprises one or several rings, for which one of these rings is a ring comprising a disulfide group.

22. The positive electrode material according to claim 21, wherein the compound comprises at least one recurrent unit fitting one of the following formulae (XI) to (XV): 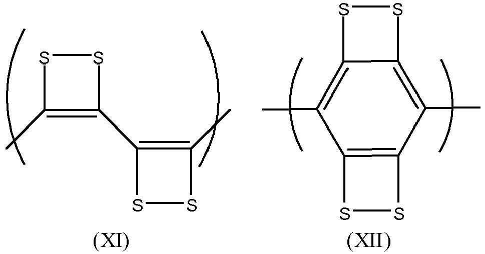 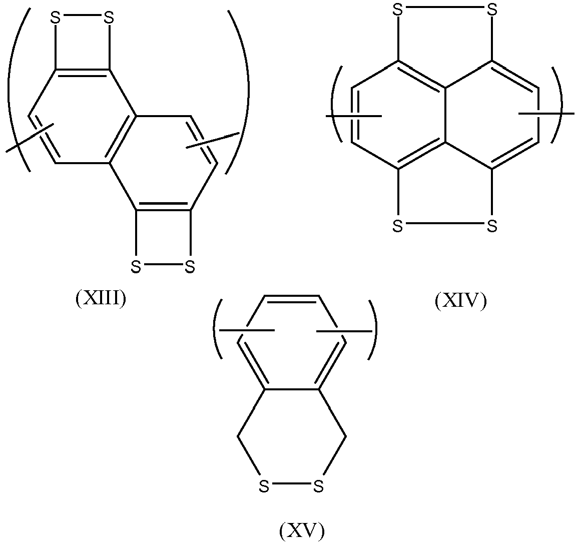 said recurrent units may be bound to the carbonaceous material via an organic group forming a bridge between the relevant recurrent unit and the carbonaceous material.

23. A positive electrode comprising a positive electrode material comprising a material as defined according to any of claims 16 to 22.
